# EUROPEAN PATENT SPECIFICATION

(11) **EP 1 338 337 B1**
(45) Date of publication and mention of the grant of the patent: **18.07.2007**
(21) Application number: 03008790.2
(22) Date of filing: 06.03.1998
(51) Int. Cl.: B01J 31/18, C07F 13/00

(54) **Catalysts and methods for catalytic oxidation**
Katalysatoren und Verfahren zur katalytischen Oxidation
Catalyseurs et procédés d'oxydation catalytique

(30) Priority: 07.03.1997 US 40629 P
(43) Date of publication of application: 27.08.2003
(62) Divisional of application: 98904334.4
(73) Proprietor: THE PROCTER & GAMBLE COMPANY, Cincinnati, Ohio 45202 (US)
(72) Inventor: Busch, Darlye Hadley, Lawrence Kansas 66049 (US); Collinson, Simon Robert, Fleetwood, Lancashire FY7 8JP (US); Hubin, Timothy Jay, McPherson, Kansas 67460 (US)
(74) Representative: Peet, Jillian Wendy

(56) References cited:
- WO-A-94/03271
- WEISMAN G R ET AL: "SYNTHESIS AND TRANSITION-METAL COMPLEXES OF NEW CROSS-BRIDGET TETRAAMINE LIGANDS" CHEMICAL COMMUNICATIONS - CHEMCOM, ROYAL SOCIETY OF CHEMISTRY, GB, no. 8, 1996, pages 947-948, XP001031187 ISSN: 1359-7345
- WEISMAN G R ET AL: "CROSS-BRIDGED CYCLAM. PROTONATION AND LI+ COMPLEXATION IN A DIAMOND-LATTICE CLEFT" JOURNAL OF THE AMERICAN CHEMICAL SOCIETY, AMERICAN CHEMICAL SOCIETY, WASHINGTON, DC, US, vol. 112, no. 23, 1990, pages 8604-8605, XP002066456 ISSN: 0002-7863

## Description

### TECHNICAL FIELD

The present invention relates to catalytic systems and methods for oxidizing materials in the presence of catalysts which are complexes of transition metals such as Mn, Fe or Cr, with selected macropolycyclic rigid ligands, preferably cross-bridged macropolycyclic ligands, and non-macrocyclic ligands.

### BACKGROUND OF THE INVENTION

A damaging effect of manganese on fabrics during bleaching has been known since the 19th century. In the 1960's and '70's, efforts were made to include simple Mn(II) salts in detergents, but none saw commercial success. More recently, metal-containing catalysts containing macrocyclic ligands have been described for use in bleaching compositions. Such catalysts include those described as manganese-containing derivatives of small macrocycles, especially 1,4,7-trimethyl-1,4,7-triazacyclononane. These catalysts assertedly catalyze the bleaching action of peroxy compounds against various stains. Several are said to be effective in washing and bleaching of substrates, including in laundry and cleaning applications and in the textile, paper and wood pulp industries. However, such metal-containing bleach catalysts, especially these manganese-containing catalysts, still have shortcomings, for example a tendency to damage textile fabric, relatively high cost, high color, and the ability to locally stain or discolor substrates.

Salts of cationic-metal dry cave complexes have been described in U.S. Patent 4,888,032, to Busch, December 19, 1989 as complexing oxygen reversibly, and are taught as being useful for oxygen scavenging and separating oxygen from air. A wide variety of ligands are taught to be usable, some of which include macrocycle ring structures and bridging groups. See also: D.H. Busch, Chemical Reviews, (1993), 93, 847 - 880, for example the discussion of superstructures on polydentate ligands at pages 856-857, and references cited therein, as well as B. K. Coltrain et al., "Oxygen Activation by Transition Metal Complexes of Macrobicyclic Cyclidene Ligands" in "The Activation of Dioxygen and Homogeneous Catalytic Oxidation", Ed. by E.H.R. Barton, et al. (Plenum Press, NY; 1993), pp. 359-380.

More recently the literature on azamacrocycles has grown at a rapid pace. Among the many references are Hancock et. al., J. Chem. Soc., Chem. Commun., (1987), 1129-1130; Weisman et al., "Synthesis and Transition Metal Complexes of New Cross-Bridged Tetraamine Ligands", Chem. Commun., (1996), 947-948; U.S. 5,428,180, U.S. 5,504,075, and U.S. 5,126,464, all to Burrows et al.; U.S. 5,480,990, to Kiefer et al.; and U.S. 5,374,416, to Rousseaux et al.

Homogeneous transition metal catalysis is a broad realm that has enjoyed intensive activity leading to a number of large scale chemical processes; e.g., the Monsanto acetic acid process, the Dupont adiponitrile process, and others, among which certain famous ones involve oxidations (Wacker Process, Midcentury Process). Further, transition metal oxidation catalysis has been promoted heavily in studies on the biomimicry of the monooxygenase enzymes, especially cytochrome P450. Whereas such studies have emphasized and shown the prowess of the native porphyrin prosthetic group, others have shown that certain oxidative capabilities exist in the same metal ions in the simple solvated condition. This history reveals the possibility that catalytic oxidation may alter almost all families of organic compounds to yield valuable products, but successful applications depend on the activity of the putative catalyst, it survivability under reaction conditions, its selectivity, and the absence of undesirable side reactions or over-reaction.

It has now surprisingly been determined that the use of certain transition-metal catalysts of specific rigid macropolycycles, preferably containing cross-bridging, in combination with non-macroppolycyclic ligands have exceptional kinetic stability such that the metal ions only dissociate very slowly under conditions which would destroy complexes with ordinary ligands, and further have exceptional thermal stability. Thus, the present invention catalyst systems can provide one or more important benefits. These include improved effectiveness and in some instances even synergy with one or more primary oxidants such as hydrogen peroxide, hydrophilically or hydrophobically activated hydrogen peroxide, preformed peracids, monopersulfate or hypochlorite; the ability to be effective catalysts, some, especially those containing Mn(II), having little to no color and allowing great formulation flexibility for use in consumer products where product aesthetics are very important; and effectiveness on a variety of substrates and reactants, including a variety of soiled or stained fabrics or hard surfaces while minimizing tendency to stain or damage such surfaces.

Therefore, the present invention provides improved catalytic systems containing transition-metal oxidation catalysts, and methods which utilize these catalysts and catalytic systems in the area of chemical syntheses involving organic oxidation reactions, such as oxidation of organic functional groups, hydrocarbons, or heteroatoms, and epoxidation of alkenes; oxidation of oxidizable stains on fabrics and hard surfaces; oxidation of reactants in solutions; pulp and paper bleaching; the oxidation of organic pollutants and for other equivalent highly desirable purposes.

These and other objects are secured herein, as will be seen from the following disclosures.

### BACKGROUND ART

Transition metals such as manganese are well-known in oxidation systems. Free Mn ⁺² ions have, for example, been implicated in the oxidation of lignin by white rot mycetes. Manganese and other transition metals in complexed form are familiar in biological systems with a variety of ligands. See, for example, "The Biological Chemistry of the Elements", J.J.R. Fraustro da Silva and R.J.P. Williams, Clarendon Press, Oxford, reprinted 1993. Complexes of ligands such as substituted porphyrins with iron, manganese, chromium or ruthenium are asserted to be useful in catalyzing a variety of oxidative reactions, including oxidation of lignin and industrial pollutants. See, for example, U.S. 5,077,394.

A recent review of nickel-catalyzed oxidations includes the following disclosures: (1) simple tetradentate ligands such as cyclam (a non-cross-bridged, N-H functional tetraazamacrocycle) or salen (a four-donor N,N,O,O ligand) render Ni(II) active for olefin epoxidation; (2) Ni salen complexes can utilize sodium hypochlorite as primary oxidant and show high catalytic turnover in epoxidation reactions; (3) bleach can be used under phase-transfer conditions for manganese porphyrin-catalyzed epoxidations and can be adapted to Ni as well; and (4) reactivity is dramatically influenced by pH with conversion of styrenes into epoxides being quantitative under conditions said to be optimized at pH 9.3.

The catalysis of oxidation reactions by transition metals is more generally useful in synthetic organic chemistry in such varied aspects of the chemical process industry as commodity chemical production and drug manufacture, in addition to the laboratory, and also in consumer product applications such as detergency. Laundry bleaching in general is reviewed in Kirk Othmer's Encyclopedia of Chemical Technology, 3rd and 4th editions under a number of headings including "Bleaching Agents", "Detergents" and "Peroxy Compounds". Laundry applications of bleaching systems include the use of amido-derived bleach activators in laundry detergents as described in U.S. 4,634,551. The use of manganese with various ligands to enhance bleaching is reported in the following United States Patents: U.S. 4,430,243; U.S. 4,728,455; U.S. 5,246,621; U.S. 5,244,594; U.S. 5,284,944; U.S. 5,194,416; U.S. 5,246,612; U.S. 5,256,779; U.S. 5,280,117; U.S. 5,274,147; U.S. 5,153,161; U.S. 5,227,084; U.S. 5,114,606; U.S. 5,114,611. See also: EP 549,271 A1; EP 544,490 A1; EP 549,272 A1; and EP 544,440 A2.

U.S. 5,580,485 describes a bleach and oxidation catalyst comprising an iron complex having formula A[LFeXₙ]^{z}Y_{q}(A) or precursors thereof. The most preferred ligand is said to be N,N-bis(pyridin-2-yl-methyl)-bis(pyridin-2-yl)methylamine, N₄Py. The Fe-complex catalyst is said to be useful in a bleaching system comprising a peroxy compound or a precursor thereof and suitable for use in the washing and bleaching of substrates including laundry, dishwashing and hard surface cleaning. Alternatively, the Fe-complex catalyst is assertedly also useful in the textile, paper and wood-pulp industries.

The art of the transition metal chemistry of macrocycles is enormous; see, for example "Heterocyclic compounds: Aza-crown macrocycles", J.S. Bradshaw et. al., Wiley-Interscience, 1993 which also describes a number of syntheses of such ligands. See especially the table beginning at p. 604. U.S. 4,888,032 describes salts of cationic metal dry cave complexes.

Cross-bridging, i.e., bridging across nonadjacent nitrogens, of cyclam (1,4,8,11-tetraazacyclotetradecane) is described by Weisman et al, J. Amer. Chem. Soc., (1990), 112(23), 8604-8605. More particularly, Weisman et al., Chem. Commun., (1996), pp. 947-948 describe new cross-bridged tetraamine ligands which are bicyclo[6.6.2], [6.5.2], and [5.5.2] systems, and their complexation to Cu(II) and Ni(II) demonstrating that the ligands coordinate the metals in a cleft.

Ramasubbu and Wainwright, J. Chem. Soc., Chem. Commun., (1982), 277-278 in contrast describe structurally reinforcing cyclen by bridging adjacent nitrogen donors. Ni(II) forms a pale yellow mononuclear diperchlorate complex having one mole of the ligand in a square planar configuration. Kojima et al, Chemistry Letters, (1996), pp. 153-154, describes assertedly novel optically active dinuclear Cu(II) complexes of a structurally reinforced tricyclic macrocycle.

Bridging alkylation of saturated polyaza macrocycles as a means for imparting structural rigidity is described by Wainwright, Inorg. Chem., (1980), 19(5), 1396-8. Mali, Wade and Hancock describe a cobalt (III) complex of a structurally reinforced macrocycle, see J. Chem. Soc., Dalton Trans., (1992), (1), 67-71. Seki et al describe the synthesis and structure of chiral dinuclear copper(II) complexes of an assertedly novel reinforced hexaazamacrocyclic ligand; see Mol. Cryst. Liq. Cryst. Sci. Technol., Sect. A (1996), 276, 79-84; see also related work by the same authors in the same Journal at 276, 85-90 and 278, 235-240.

[Mn(III)₂(µ-O)(µ- O₂CMe)₂L₂]²⁺ and [Mn(IV)₂(µ-O)₃L₂]²⁺ complexes derived from a series of N-substituted 1,4,7-triazacyclononanes are described by Koek et al., see J. Chem. Soc., Dalton Trans., (1996), 353-362. Important earlier work by Wieghardt and co-workers on 1,4,7-triazacyclononane transition metal complexes, including those of Manganese, is described in Angew. Chem. Internat. Ed. Engl., (1986), 25, 1030-1031 and J. Amer. Chem. Soc., (1988), 110, 7398.

Ciampolini et al., J. Chem. Soc., Dalton Trans., (1984), 1357-1362 describe synthesis and characterization of the macrocycle 1,7-dimethyl-1,4,7,10-tetraazacyclododecane and of certain of its Cu(II) and Ni(II) complexes including both a square-planar Ni complex and a cis-octahedral complex with the macrocycle co-ordinated in a folded configuration to four sites around the central nickel atom. Hancock et al, Inorg. Chem., (1990), 29, 1968-1974 describe ligand design approaches for complexation in aqueous solution, including chelate ring size as a basis for control of size-based selectivity for metal ions. Thermodynamic data for macrocycle interaction with cations, anions and neutral molecules is reviewed by Izatt et al., Chem. Rev., (1995), 95, 2529-2586 (478 references).

Bryan et al, Inorg. Chem., (1975), 14(2)., 296-299 describe synthesis and characterization of Mn(II) and Mn(III) complexes of *meso*-5,5,7-12,12,14-hexamethyl-1,4,8,11-tetraazacyclotetradecane ([14]aneN4]. The isolated solids are assertedly frequently contaminated with free ligand or "excess metal salt" and attempts to prepare chloride and bromide derivatives gave solids of variable composition which could not be purified by repeated crystallization.

Costa and Delgado, Inorg. Chem., (1993), 32, 5257-5265, describe metal complexes such as the Co(II), Ni(II) and Cu(II) complexes, of macrocyclic complexes containing pyridine. Derivatives of the cross-bridged cyclens, such as salts of 4,10-dimethyl-1,4,7,10-tetraazabicyclo[5.5.2]tetradecane, are described by Bencini et al., see Supramolecular Chemistry, 3., 141-146. U.S. 5,428,180 and related work by Cynthia Burrows and co-workers in U.S. 5,272,056 and U.S. 5,504,075 describe pH dependence of oxidations using cyclam or its derivatives, oxidations of alkenes to epoxides using metal complexes of such derivatives, and pharmaceutical applications. Hancock et al., Inorganica Chimica Acta., (1989), 164, 73-84 describe under a title including "complexes of structurally reinforced tetraazamacrocyclic ligands of high ligand field strength" the synthesis of complexes of low-spin Ni(II) with three assertedly novel bicyclic macrocycles. The complexes apparently involve nearly coplanar arrangements of the four donor atoms and the metals despite the presence of the bicyclic ligand arrangement. Bencini et al., J. Chem. Soc., Chem. Commun., (1990), 174-175 describe synthesis of a small aza-cage, 4,10-dimethyl-1,4,7,10-15-pentaazabicyclo[5.5.5]heptadecane, which "encapsulates" lithium. Hancock and Martell, Chem. Rev., (1989), 89, 1875-1914 review ligand design for selective complexation of metal ions in aqueous solution. Conformers of cyclam complexes are discussed on page 1894 including a folded conformer -see Fig. 18 (cis-V). The paper includes a glossary. In a paper entitled "Structurally Reinforced Macrocyclic Ligands that Show Greatly Enhanced Selectivity for Metal Ions on the Basis of the Match and Size Between the Metal Ion and the Macrocyclic Cavity", Hancock et al., J. Chem. Soc., Chem. Commun., (1987), 1129-1130 describe formation constants for Cu(II), Ni(II) and other metal complexes of some bridged macrocycles having piperazine-like structure.

Many other macrocycles are described in the art, including types with pedant groups and a wide range of intracyclic and exocyclic substituents. Although the macrocycle and transition metal complex literature are, separately, vast, relatively little appears to have been reported on how to select and combine specific transition metals and specific macrocycle classes, for example cross-bridged tetraaza- and penta-aza macrocycles, so as to apply them for the further improvement of oxidation catalysis. There is, for example, no apparent singling out of these materials from the vast chemical literature, either alone or as their transition metal complexes, for use in bleaching detergents.

### SUMMARY OF THE INVENTION

The present invention relates to a catalytic system effective as defined in claim 1.

### DETAILED DESCRIPTION OF THE INVENTION

### Catalytic Systems for Oxidizing Materials:

The catalytic systems of the present invention comprise a particularly selected transition-metal oxidation catalyst which is a complex of a transition metal and a macropolycyclic rigid ligand, there is cross-bridged, and a non-macropolycyclic ligand; the catalytic systems preferably also comprise an oxidation agent or "primary oxidant", preferably one which is a low cost, readily available substance producing little or no waste, such as a source of hydrogen peroxide. The source of hydrogen peroxide can be H₂O₂ itself, its solutions, or any common hydrogen-peroxide releasing salt, adduct or precursor, such as sodium perborate, sodium percarbonate, or mixtures thereof. Also useful are other sources of available oxygen such as persulfate (e.g., OXONE, manufactured by DuPont), as well as preformed organic peracids and other organic peroxides. More generally, chlorine or other oxidants such as ClO₂ or NaOCI can be used.

Mixtures of primary oxidants can be used; in such mixtures, an oxidant which is not present in major proportion can be used, for example as in mixtures of a major proportion of hydrogen peroxide and a minor proportion of peracetic acid or its salts. In this example, the peracetic acid is termed the "secondary oxidant". Secondary oxidants can be selected from the same list of oxidants given hereinafter; the use of secondary oxidants is optional but may be highly desirable in certain embodiments of the invention. The catalytic system often further comprises further adjuncts, including compounds which liberate oxidant as a result of in-situ chemical reaction; as well as solvents and other additives characteristic of the end-use of the catalytic system. To secure the benefits of the invention, a substrate material, such as a chemical compound to be oxidized, or a commercial mixture of materials such as a paper pulp, or a soiled material such as a textile containing one or more materials or soils to be oxidized, is added to the catalytic system under widely ranging conditions further described hereinafter.

The catalytic systems herein are useful for oxidative synthetic chemistry processes, such as oxidation of organic functional groups, hydrocarbons, heteroatoms, and epoxidation (including enantiomeric) of alkenes and enynes, oxidation of sulfides to sulfones, and the like.

The present invention catalytic systems also have utility in the area of oxidizing (preferably including bleaching) wood pulp for use in, for example, paper making processes. Other utilities include oxidative destruction of waste materials or effluents.

### Effective Amounts of Catalyst Materials

The term "catalytically effective amount", as used herein, refers to an amount of the transition-metal oxidation catalyst present in the present invention catalytic systems, or during use according to the present invention methods, that is sufficient, under whatever comparative or use conditions are employed, to result in at least partial oxidation of the material sought to be oxidized by the catalytic systems or method. For example, in the synthesis of epoxides from alkenes, the catalytic amount is that amount which is sufficient to catalyze the desired epoxidation reaction. As noted, the invention encompasses catalytic systems both at their in-use levels and at the levels which may commercially be provided for sale as "concentrates"; thus "catalytic systems" herein include both those in which the catalyst is highly dilute and ready to use, for example at ppb levels, and compositions having rather higher concentrations of catalyst and adjunct materials. Intermediate level compositions, as noted in summary, can include those comprising from 0.01 ppm to 500 ppm, more preferably from 0.05 ppm to 50 ppm, more preferably still from 0.1 ppm to 10 ppm of transition-metal catalyst and the balance to 100%, typically about 99% or more, being solid-form or liquid-form detergent adjunct materials (for example fillers, solvents.

### Transition-Metal Oxidation Catalysts:

The present invention catalytic systems comprise a transition-metal oxidation catalyst. In general, the catalyst contains an at least partially covalently bonded transition metal, and bonded thereto at least one particularly defined macropolycyclic rigid ligand having four or more donor atoms and which is cross-bridged or otherwise tied so that the primary macrocycle ring complexes in a folded conformation about the metal. Catalysts herein are thus neither of the more conventional macrocyclic type: e.g., porphyrin complexes, in which the metal can readily adopt square-planar configuration; nor are they complexes in which the metal is fully encrypted in a ligand. Rather, the presently useful catalysts represent a selection of all the many complexes, hitherto largely unrecognized, which have an intermediate state in which the metal is bound in a "cleft". Further, there can be present in the catalyst one or more additional ligands, of generally conventional type such as chloride covalently bound to the metal; and, if needed, one or more counter-ions, most commonly anions such as chloride, hexafluorophosphate, perchlorate or the like; and additional molecules to complete crystal formation as needed, such as water of crystallization.
Preferred complexes useful as transition-metal oxidation catalysts more generally include not only monometallic, mononuclear kinds such as those illustrated hereinabove but also bimetallic, trimetallic or cluster kinds, especially when the polymetallic kinds transform chemically in the presence of a primary oxidant to form a mononuclear, monometallic active species. Monometallic, mononuclear complexes are preferred. As defined herein, a monometallic transition-metal oxidation catalyst contains only one transition metal atom per mole of complex. A monometallic, mononuclear complex is one in which any donor atoms of the essential macrocyclic ligand are bonded to the same transition metal atom, that is, the essential ligand does not "bridge" across two or more transition-metal atoms.

### Transition Metals of the Catalyst

Just as the macropolycyclic ligand cannot vary indeterminately for the present useful purposes, nor can the metal. An important part of the invention is to arrive at a match between ligand selection and metal selection which results in excellent oxidation catalysis. In general, transition-metal oxidation catalysts herein comprise a transition metal selected from the group consisting of Mn(II), Mn(III), Mn(IV), Mn(V), Fe(II), Fe(III), Fe(IV), Cr(II), Cr(III), Cr(IV), Cr(V), Cr(VI).

The transition-metals in the instant transition-metal oxidation catalyst include manganese, iron and chromium. Preferred oxidation states include the (II) and (III) oxidation states. Manganese(II) in both the low-spin configuration and high spin complexes are included. It is to be noted that complexes such as low-spin Mn(II) complexes are rather rare in all of coordination chemistry. The designation (II) or (III) denotes a coordinated transition metal having the requisite oxidation state; the coordinated metal atom is not a free ion or one having only water as a ligand.

### Ligands

In general, as used herein, a "ligand" is any moiety capable of direct covalent bonding to a metal ion. Ligands can be charged or neutral and may range widely, including simple monovalent donors, such as chloride, or simple amines which form a single coordinate bond and a single point of attachment to a metal; to oxygen or ethylene, which can form a three-membered ring with a metal and thus can be said to have two potential points of attachment, to larger moieties such as ethylenediamine or aza macrocycles, which form up to the maximum number of single bonds to one or more metals that are allowed by the available sites on the metal and the number of lone pairs or alternate bonding sites of the free ligand. Numerous ligands can form bonds other than simple donor bonds, and can have multiple points of attachment.

Ligands useful herein can fall into several groups: the essential macropolycyclic rigid ligand that is a cross-bridged macropolycycle (preferably there will be one such ligand in a useful transition-metal complex, but more, for example two, can be present, but not in preferred mononuclear complexes); other, optional ligands, which in general are different from the essential cross-bridged macropolycycle (generally there will be from 0 to 4, preferably from 1 to 3 such ligands); and ligands associated transiently with the metal as part of the catalytic cycle, these latter typically being related to water, hydroxide, oxygen, water, hydroxide, or peroxides. Ligands which bind to metals through donor atoms each having at least a single lone pair of electrons available for donation to a metal have a donor capability, or potential denticity, at least equal to the number of donor atoms. In general, that donor capability may be fully or only partially exercised.

### Macropolycyclic Rigid Ligands

To arrive at the instant transition-metal catalysts, a macropolycyclic rigid ligand is essential. This is coordinated (covalently connected to any of the above-identified transition-metals) by at least three, four, and preferably five, donor atoms to the same transition metal.

Generally, the macropolycyclic rigid ligands herein can be viewed as the result of imposing additional structural rigidity on specifically selected "parent macrocycles". The term "rigid" herein has been defined as the constrained converse of flexibility: see D.H. Busch., Chemical Reviews., (1993), 93, 847-860, incorporated by reference. More particularly, "rigid" as used herein means that the essential ligand, to be suitable for the purposes of the invention, must be determinably more rigid than a macrocycle ("parent macrocycle") which is otherwise identical (having the same ring size and type and number of atoms in the main ring) but lacks the superstructure (especially linking moieties or, preferably cross-bridging moieties) of the present ligands. In determining the comparative rigidity of the macrocycles with and without superstructures, the practitioner will use the free form (not the metal-bound form) of the macrocycles. Rigidity is well-known to be useful in comparing macrocycles; suitable tools for determining, measuring or comparing rigidity include computational methods (see, for example, Zimmer, Chemical Reviews, (1995), 95(38), 2629-2648 or Hancock et al., Inorganica Chimica Acta, (1989), 164, 73-84. A determination of whether one macrocycle is more rigid than another can be often made by simply making a molecular model, thus it is not in general essential to know configurational energies in absolute terms or to precisely compute them. Excellent comparative determinations of rigidity of one macrocycle vs. another can be made using inexpensive personal computer-based computational tools, such as ALCHEMY III, commercially available from Tripos Associates. Tripos also has available more expensive software permitting not only comparative, but absolute determinations; alternately, SHAPES can be used (see Zimmer cited supra). One observation which is significant in the context of the present invention is that there is an optimum for the present purposes when the parent macrocycle is distinctly flexible as compared to the cross-bridged form. Thus, unexpectedly, it is preferred to use parent macrocycles containing at least four donor atoms, such as cyclam derivatives, and to cross-bridge them, rather than to start with a more rigid parent macrocycle. Another observation is that cross-bridged macrocycles are significantly preferred over macrocycles which are bridged in other manners.

The macrocyclic rigid ligands herein are of course not limited to being synthesized from any preformed macrocycle plus preformed "rigidizing" or "conformation-modifying" element: rather, a wide variety of synthetic means, such as template syntheses, are useful. See for example Busch et al., reviewed in "Heterocyclic compounds: Aza-crown macrocycles", J.S. Bradshaw et. al., referred to in the Background Section hereinbefore, for synthetic methods.

In one aspect of the present invention, the macropolycyclic rigid ligands herein include those comprising:
(i) an organic macrocycle ring containing four, or more donor atoms (preferably at least 3, more preferably at least 4, of these donor atoms are N) separated from each other by covalent linkages of at least one, preferably 2 or 3, non-donor atoms, two to five (preferably three to four, more preferably four) of these donor atoms being coordinated to the same transition metal in the complex; and
(ii) a linking moiety that is a cross-bridging chain, which covalently connects at least 2 non-adjacent donor atoms of the organic macrocycle ring, said covalently connected non-adjacent donor atoms being bridgehead donor atoms which are coordinated to the same transition metal in the complex, and wherein said linking moiety comprises from 2 to about 10 atoms (preferably the cross-bridged chain is selected from 2, 3 or 4 non-donor atoms, and 4-6 non-donor atoms with a further donor atom).

While clear from the various contexts and illustrations already presented, the practitioner may further benefit if certain terms receive additional definition and illustration. As used herein, "macrocyclic rings" are covalently connected rings formed from four or more, donor atoms (i.e., heteroatoms such as nitrogen or oxygen) with carbon chains connecting them, and any macrocycle ring as defined herein must contain a total of at least ten, preferably at least twelve, atoms in the macrocycle ring. A macropolycyclic rigid ligand herein may contain more than one ring of any sort per ligand, but at least one macrocycle ring must be identifiable. Moreover, in the preferred embodiments, no two heteroatoms are directly connected. Preferred transition-metal oxidation catalysts are those wherein the macropolycyclic rigid ligand comprises an organic macrocycle ring (main ring) containing at least 10-20 atoms, preferably 12-18 atoms, more preferably from 12 to 20 atoms, most preferably 12 to 16 atoms.

"Donor atoms" herein are heteroatoms such as nitrogen, oxygen, phosphorus or sulfur, which when incorporated into a ligand still have at least one lone pair of electrons available for forming a donor-acceptor bond with a metal. Preferred transition-metal oxidation catalyst are those wherein the donor atoms in the organic macrocycle ring of the cross-bridged macropolycyclic ligand are selected from the group consisting of N, O, S, and P, preferably N and O, and most preferably all N. Also preferred are cross-bridged macropolycyclic ligands comprising 4 or 5 donor atoms, all of which are coordinated to the same transition metal. Most preferred transition-metal oxidation catalysts are those wherein the cross-bridged macropolycyclic ligand comprises 4 nitrogen donor atoms all coordinated to the same transition metal, and those wherein the cross-bridged macropolycyclic ligand comprises 5 nitrogen atoms all coordinated to the same transition metal.

"Non-donor atoms" of the macropolycyclic rigid ligand herein are most commonly carbon, though a number of atom types can be included, especially in optional exocyclic substituents (such as "pendant" moieties, illustrated hereinafter) of the macrocycles, which are neither donor atoms for purposes essential to form the metal catalysts, nor are they carbon. Thus, in the broadest sense, the term "non-donor atoms" can refer to any atom not essential to forming donor bonds with the metal of the catalyst. Examples of such atoms could include heteroatoms such as sulfur as incorporated in a non-coordinatable sulfonate group, phosphorus as incorporated into a phosphonium salt moiety, phosphorus as incorporated into a P(V) oxide, a non-transition metal, or the like. In certain preferred embodiments, all non-donor atoms are carbon.

The term "macropolycyclic ligand" is used herein to refer to the essential ligand required for forming the essential metal catalyst. As indicated by the term, such a ligand is both a macrocycle and is polycyclic. "Polycyclic" means at least bicyclic in the conventional sense. The essential macropolycyclic ligands must be rigid, and preferred ligands must also cross-bridged.

Non-limiting examples of macropolycyclic rigid ligands, as defined herein, include 1.3-1.7: 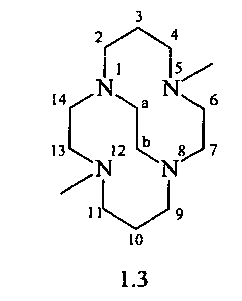 Ligand 1.3 is a macropolycylic rigid ligand in accordance with the invention which is a highly preferred, cross-bridged, methyl-substituted (all nitrogen atoms tertiary) derivative of cyclam. Formally, this ligand is named 5,12-dimethyl-1,5,8,12-tetraazabicyclo[6.6.2]hexadecane using the extended von Baeyer system. See "A Guide to IUPAC Nomenclature of Organic Compounds: Recommendations 1993", R. Panico, W.H. Powell and J-C Richer (Eds.), Blackwell Scientific Publications, Boston, 1993; see especially section R-2.4.2.1. According to conventional terminology, N1 and N8 are "bridgehead atoms"; as defined herein, more particularly "bridgehead donor atoms" since they have lone pairs capable of donation to a metal. N1 is connected to two non-bridgehead donor atoms, N5 and N12, by distinct saturated carbon chains 2,3,4 and 14,13 and to bridgehead donor atom N8 by a "linking moiety" a,b which here is a saturated carbon chain of two carbon atoms. N8 is connected to two non-bridgehead donor atoms, N5 and N12, by distinct chains 6,7 and 9,10,11. Chain a,b is a "linking moiety" as defined herein, and is of the special, preferred type referred to as a "cross-bridging" moiety. The "macrocyclic ring" of the ligand supra, or "main ring" (IUPAC), includes all four donor atoms and chains 2,3,4; 6,7; 9,10,11 and 13,14 but not a,b. This ligand is conventionally bicyclic. The short bridge or "linking moiety" a,b is a "cross-bridge" as defined herein, with a,b bisecting the macrocyclic ring. 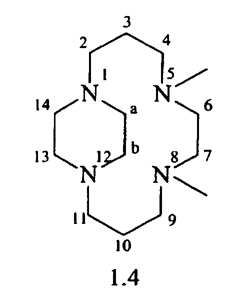 Ligand 1.4 lies within the general definition of macropolycyclic rigid ligands as defined herein, but is not a preferred ligand since it is not "cross-bridged" as defined herein. Specifically, the "linking moiety" a,b connects "adjacent" donor atoms N1 and N12, which is outside the preferred embodiment of the present invention: see for comparison the preceding macrocyclic rigid ligand, in which the linking moiety a,b is a cross-bridging moiety and connects "non-adjacent" donor atoms. 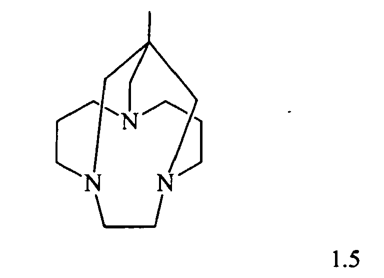 Ligand 1.5 lies within the general definition of macropolycyclic rigid ligands as defined herein, but is not a preferred ligand since it contains only three donor atoms, all of which are bridgehead donor atoms. 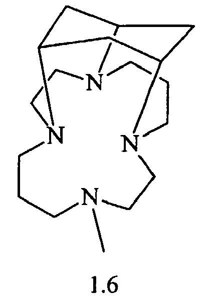 Ligand 1.6 lies within the general definition of macropolycylic rigid ligands as defined herein. This ligand can be viewed as a "main ring" which is a tetraazamacrocycle having three bridgehead donor atoms. This macrocycle is bridged by a "linking moiety" having a structure more complex than a simple chain, containing as it does a secondary ring. The linking moiety includes both a "cross-bridging" mode of bonding, and a non-cross-bridging mode. 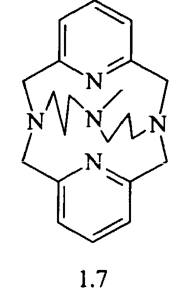 Ligand 1.7 lies within the general definition of macropolycylic rigid ligands. Five donor atoms are present; two being bridgehead donor atoms. This ligand is a preferred cross-bridged ligand. It contains no exocyclic or pendant substituents which have aromatic content.

Generally, the essential macropolycyclic rigid ligands (and the corresponding transition-metal catalysts) herein comprise:
(a) at least one macrocycle main ring comprising three or more heteroatoms; and
(b) a covalently connected non-metal superstructure capable of increasing the rigidity of the macrocycle, preferably selected from
   (i) a bridging superstructure, such as a linking moiety;
   (ii) a cross-bridging superstructure, such as a cross-bridging linking moiety; and
   (iii) combinations thereof.

The term "superstructure" is used herein as defined by Busch et al., in the Chemical Reviews article incorporated hereinabove.

Preferred superstructures herein not only enhance the rigidity of the parent macrocycle, but also favor folding of the macrocycle so that it co-ordinates to a metal in a cleft. Suitable superstructures can be remarkably simple, for example a linking moiety such as any of those illustrated in 1.10 and 1.11 below, can be used. 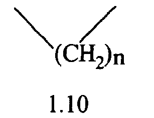 wherein n is an integer, for example from 2 to 8, preferably less than 6, typically 2 to 4, or 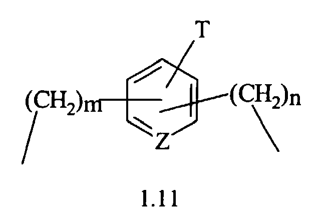 wherein m and n are integers from about 1 to 8, more preferably from 1 to 3; Z is N or CH; and T is a compatible substituent, for example H, alkyl, trialkylammonium, halogen, nitro, sulfonate, or the like. The aromatic ring in 1.11 can be replaced by a saturated ring, in which the atom in Z connecting into the ring can contain N, O, S or C.

Without intending to be limited by theory, it is believed that the preorganization built into the macropolycyclic ligands herein that leads to extra kinetic and/or thermodynamic stability of their metal complexes arises from either or both of topological constraints and enhanced rigidity (loss of flexibility) compared to the free parent macrocycle which has no superstructure. The macropolycyclic rigid ligands as defined herein and their preferred cross-bridged sub-family, which can be said to be "ultra-rigid", combine two sources of fixed preorganization. In preferred ligands herein, the linking moieties and parent macrocycle rings are combined to form ligands which have a significant extent of "fold", typically greater than in many known superstructured ligands in which a superstructure is attached to a largely planar, often unsaturated macrocycle. See, for example, : D.H. Busch, Chemical Reviews, (1993), 93, 847 - 880. Further, the preferred ligands herein have a number of particular properties, including (1) they are characterized by very high proton affinities, as in so-called "proton sponges"; (2) they tend to react slowly with multivalent transition metals, which when combined with (1) above, renders synthesis of their complexes with certain hydrolyzable metal ions difficult in hydroxylic solvents; (3) when they are coordinated to transition metal atoms as identified herein, the ligands result in complexes that have exceptional kinetic stability such that the metal ions only dissociate extremely slowly under conditions that would destroy complexes with ordinary ligands; and (4) these complexes have exceptional thermodynamic stability; however, the unusual kinetics of ligand dissociation from the transition metal may defeat conventional equilibrium measurements that might quantitate this property.

Other usable but more complex superstructures suitable for the present invention purposes include those containing an additional ring, such as in 1.6. Other bridging superstructures when added to a macrocycle include, for example, 1.4. In contrast, cross-bridging superstructures unexpectedly produce a substantial improvement in the utility of a macrocyclic ligand for use in oxidation catalysis: a preferred cross-bridging superstructure is 1.3. A superstructure illustrative of a bridging plus cross-bridging combination is 1.12: 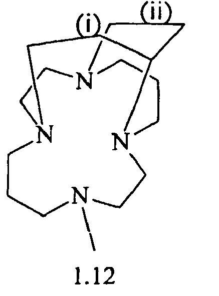 In 1.12, linking moiety (i) is cross-bridging, while linking moiety (ii) is not. 1.12 is less preferred than 1.3.

More generally, a "linking moiety", as defined herein, is a covalently linked moiety comprising a plurality of atoms which has at least two points of covalent attachment to a macrocycle ring and which does not form part of the main ring or rings of the parent macrocycle. In other terms, with the exception of the bonds formed by attaching it to the parent macrocycle, a linking moiety is wholly in a superstructure.

The terms "cross-bridged" or "cross-bridging", as used herein, refers to covalent ligation, bisection or "tying" of a macrocycle ring in which two donor atoms of the macrocycle ring are covalently connected by a linking moiety, for example an additional chain distinct from the macrocycle ring, and further, preferably, in which there is at least one donor atom of the macrocycle ring in each of the sections of the macrocycle ring separated by the ligation, bisection or tying. Cross-bridging is not present in structure 1.4 hereinabove; it is present in 1.3, where two donor atoms of a preferred macrocycle ring are connected in such manner that there is not a donor atom in each of the bisection rings. Of course, provided that cross-bridging is present, any other kind of bridging can optionally be added and the bridged macrocycle will retain the preferred property of being "cross-bridged": see Structure 1.12. A "cross-bridged chain" or "cross-bridging chain", as defined herein, is thus a highly preferred type of linking moiety comprising a plurality of atoms which has at least two points of covalent attachment to a macrocycle ring and which does not form part of the original macrocycle ring (main ring), and further, which is connected to the main ring using the rule identified in defining the term "cross-bridging".

The term "adjacent" as used herein in connection with donor atoms in a macrocycle ring means that there are no donor atoms intervening between a first donor atom and another donor atom within the macrocycle ring; all intervening atoms in the ring are non-donor atoms, typically they are carbon atoms. The complementary term "non-adjacent" as used herein in connection with donor atoms in a macrocycle ring means that there is at least one donor atom intervening between a first donor atom and another that is being referred to. In preferred cases such as a cross-bridged tetraazamacrocycle, there will be at least a pair of non-adjacent donor atoms which are bridgehead atoms, and a further pair of non-bridgehead donor atoms.

"Bridgehead" atoms herein are atoms of a macropolycyclic ligand which are connected into the structure of the macrocycle in such manner that each non-donor bond to such an atom is a covalent single bond and there are sufficient covalent single bonds to connect the atom termed "bridgehead" such that it forms a junction of at least two rings, this number being the maximum observable by visual inspection in the un-coordinated ligand.

In general, the metal oxidation catalysts herein may contain bridgehead atoms which are carbon, however, and importantly, in certain preferred embodiments, all essential bridgehead atoms are heteroatoms, all heteroatoms are tertiary, and further, they each co-ordinate through lone pair donation to the metal. Thus, bridgehead atoms are junction points not only of rings in the macrocycle, but also of chelate rings.

The term "a further donor atom" unless otherwise specifically indicated, as used herein, refers to a donor atom other than a donor atom contained in the macrocycle ring of an essential macropolycycle. For example, a "further donor atom" may be present in an optional exocyclic substituent of a macrocyclic ligand , or in a cross-bridged chain thereof. In certain preferred embodiments, a "further donor atom" is present only in a cross-bridged chain.

The term "coordinated with the same transition metal" as used herein is used to emphasize that a particular donor atom or ligand does not bind to two or more distinct metal atoms, but rather, to only one.

### Non-macropolycyclic Ligands

It is to be recognized for the transition-metal oxidation catalysts useful in the present invention catalytic systems that additional non-macropolycyclic ligands are coordinated to the metal, as necessary to complete the coordination number of the metal complexed. Such ligands may have any number of atoms capable of donating electrons to the catalyst complex, but preferred optional ligands have a denticity of 1 to 3, preferably 1. Examples of such ligands are H₂O, ROH, NR₃, RCN, OH⁻, OOH⁻, RS⁻, RO⁻, RCOO⁻, OCN⁻, SCN⁻, N₃⁻, CN⁻, F⁻, Cl⁻, Br⁻, I⁻, O₂⁻, NO₃⁻, NO₂⁻, SO₄²⁻, SO₃²⁻, PO₄³⁻, organic phosphates, organic phosphonates, organic sulfates, organic sulfonates, and aromatic N donors such as pyridines, pyrazines, pyrazoles, imidazoles, benzimidazoles, pyrimidines, triazoles and thiazoles with R being H, optionally substituted alkyl, optionally substituted aryl. Preferred transition-metal oxidation catalysts comprise two non-macropolycyclic ligands.

The term "non-macropolycyclic ligands" is used herein to refer to ligands such as those illustrated immediately hereinabove.

The term "metal catalyst" or "transition-metal oxidation catalyst" is used herein to refer to the essential catalyst compound of the invention and is commonly used with the "metal" qualifier unless absolutely clear from the context. Note that there is a disclosure hereinafter pertaining specifically to optional catalyst materials. Therein the term "bleach catalyst" may be used unqualified to refer to optional, organic (metal-free) catalyst materials, or to optional metal-containing catalysts that lack the advantages of the essential catalyst: such optional materials, for example, include known metal porphyrins or metal-containing photobleaches. Other optional catalytic materials herein include enzymes.

The macropolycyclic rigid ligands of the inventive compositions and methods also include ligands selected from the group consisting of:
(i) the macropolycyclic rigid ligand of formula (I) having denticity of 3 or, preferably, 4: 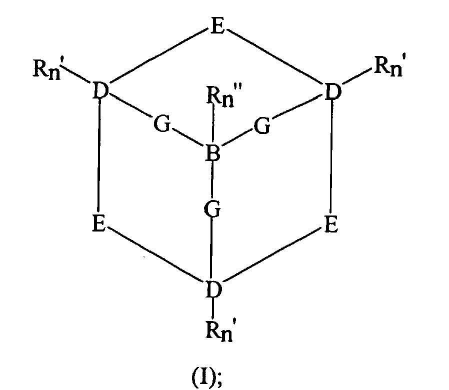
(ii) the macropolycyclic rigid ligand of formula (II) having denticity of 4 or 5: 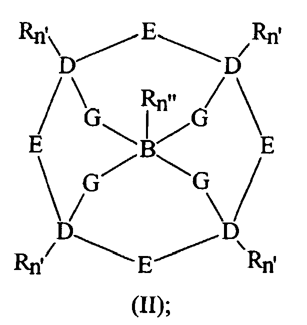
(iii) the macropolycyclic rigid ligand of formula (III) having denticity of 5 or 6: 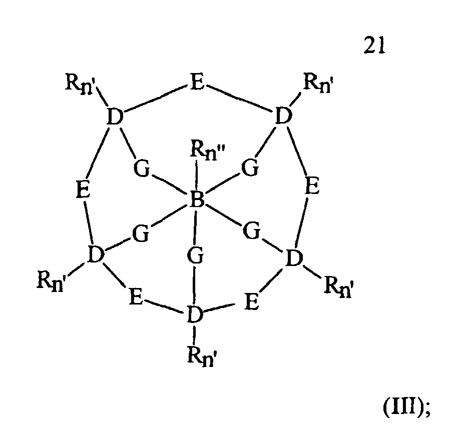
(iv) the macropolycyclic rigid ligand of formula (IV) having denticity of 6 or 7: 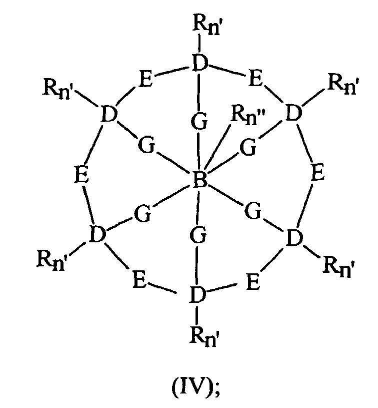
wherein in these formulas:
- each "E" is the moiety (CRₙ)ₐ-X-(CRₙ)_{a'}, wherein X is selected from the group consisting of O, S, NR and P, or a covalent bond, and preferably X is a covalent bond and for each E the sum of a + a' is independently selected from 1 to 5, more preferably 2 and 3;
- each "G" is the moiety (CRₙ)_{b};
- each "R" is independently selected from H, alkyl, alkenyl, alkynyl, aryl, alkylaryl (e.g., benzyl), and heteroaryl, or two or more R are covalently bonded to form an aromatic, heteroaromatic, cycloalkyl, or heterocycloalkyl ring;
- each "D" is a donor atom independently selected from the group consisting of N, O, S, and P, and at least two D atoms are bridgehead donor atoms coordinated to the transition metal;
- "B" is a carbon atom or "D" donor atom, or a cycloalkyl or heterocyclic ring;
- each "n" is an integer independently selected from 1 and 2, completing the valence of the carbon atoms to which the R moieties are covalently bonded;
- each "n"' is an integer independently selected from 0 and 1, completing the valence of the D donor atoms to which the R moieties are covalently bonded;
- each "n"" is an integer independently selected from 0, 1, and 2 completing the valence of the B atoms to which the R moieties are covalently bonded;
- each "a" and "a"'is an integer independently selected from 0-5, preferably a + a' equals 2 or 3, wherein the sum of all "a" plus "a"' in the ligand of formula (I) is within the range of from about 7 to about 12, the sum of all "a" plus "a"' in the ligand of formula (II) is within the range of from about 6 (preferably 8) to about 12, the sum of all "a" plus "a"' in the ligand of formula (III) is within the range of from about 8 (preferably 10) to about 15, and the sum of all "a" plus "a"' in the ligand of formula (IV) is within the range of from about 10 (preferably 12) to about 18;
- each "b" is an integer independently selected from 0-5, or in any of the above formulas, one or more of the (CRₙ)_{b} moieties covalently bonded from any D to the B atom is absent as long as at least two (CRₙ)_{b} covalently bond two of the D donor atoms to the B atom in the formula, and the sum of all "b" is within the range of from about 1 to about 5. Preferred ligands of the above formulas are those which are cross-bridged macropolycyclic ligands having Formulas (II), (III) or (IV).

It is to be noted herein that for the above formulas wherein "a" or "a"' is 1, these ligands are not preferred for potential instability reasons in selected solvents, but are still within the scope of the present invention.

Preferred are the transition-metal oxidation catalysts wherein in the cross-bridged macropolycyclic ligand the D and B are selected from the group consisting of N and O, and preferably all D are N. Also preferred are wherein in the cross-bridged macropolycyclic ligand all "a" are independently selected from the integers 2 and 3, all X are selected from covalent bonds, all "a"' are 0, and all "b" are independently selected from the integers 0, 1, and 2. Tetradentate and pentadentate cross-bridged macropolycyclic ligands are most preferred.

Unless otherwise specified, the convention herein when referring to denticity, as in "the macropolycycle has a denticity of four" will be to refer to a characteristic of the ligand: namely, the maximum number of donor bonds that it is capable of forming when it coordinates to a metal. Such a ligand is identified as "tetradentate". Similarly, a macropolycycle containing five nitrogen atoms each with a lone pair is referred to as "pentadentate". The present invention encompasses catalytic systems in which the macrocyclic rigid ligand exerts its full denticity, as stated, in the transition-metal catalyst complexes; moreover, the invention also encompasses any equivalents which can be formed, for example, if one or more donor sites are not directly coordinated to the metal. This can happen, for example, when a pentadentate ligand coordinates through four donor atoms to the transition metal and one donor atom is protonated.

The further to illustrate preferred catalytic systems, the invention also includes those containing metal catalysts wherein the cross-bridged macropolycyclic ligand is a bicyclic ligand; preferably the cross-bridged macropolycyclic ligand is a macropolycyclic moiety of formula (II) having the formula: 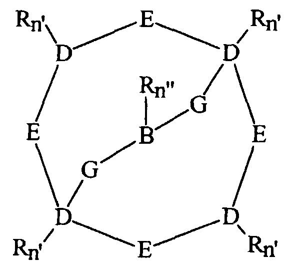 wherein each "a" is independently selected from the integers 2 or 3, and each "b" is independently selected from the integers 0, 1 and 2.

Further preferred are the compositions containing cross-bridged macropolycyclic ligands having the formula: 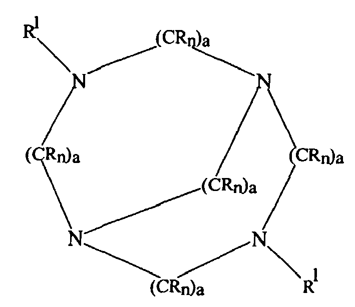 wherein in this formula:
- each "n" is an integer independently selected from 1 and 2, completing the valence of the carbon atom to which the R moieties are covalently bonded;
- each "R" and "R¹" is independently selected from H, alkyl, alkenyl, alkynyl, aryl, alkylaryl (e.g., benzyl) and heteroaryl, or R and/or R¹ are covalently bonded to form an aromatic, heteroaromatic, cycloalkyl, or heterocycloalkyl ring, and wherein preferably all R are H and R¹ are independently selected from linear or branched, substituted or unsubstituted C₁-C₂₀ alkyl, alkenyl or alkynyl;
- each "a" is an integer independently selected from 2 or 3;
- preferably all nitrogen atoms in the cross-bridged macropolycycle rings are coordinated with the transition metal.

The invention further includes the novel methods, compositions, and transition-metal catalysts which include the transition-metal complexes, preferably the Mn, Fe and Cr complexes, or preferred cross-bridged macropolycyclic ligands having the formula: 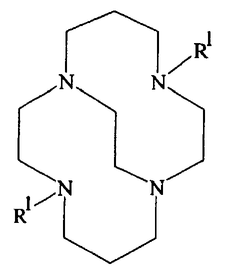 wherein in this formula "R¹" is independently selected from H, and linear or branched, substituted or unsubstituted C₁-C₂₀ alkyl, alkylaryl, alkenyl or alkynyl, more preferably R¹ is alkyl or alkylaryl; and preferably all nitrogen atoms in the macropolycyclic rings are coordinated with the transition metal.

Also preferred are cross-bridged macropolycyclic ligands having the formula: 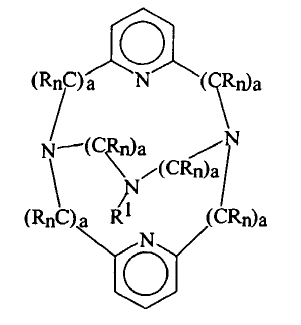 wherein in this formula:
- each "n" is an integer independently selected from 1 and 2, completing the valence of the carbon atom to which the R moieties are covalently bonded;
- each "R" and "R¹" is independently selected from H, alkyl, alkenyl, alkynyl, aryl, alkylaryl (e.g., benzyl), and heteroaryl, or R and/or R¹ are covalently bonded to form an aromatic, heteroaromatic, cycloalkyl, or heterocycloalkyl ring, and wherein preferably all R are H and R¹ are independently selected from linear or branched, substituted or unsubstituted C₁-C₂₀ alkyl, alkenyl or alkynyl;
- each "a" is an integer independently selected from 2 or 3;
- preferably all nitrogen atoms in the macropolycyclic rings are coordinated with the transition metal. In terms of the present invention, even though any of such ligands are known, the invention encompasses the use of these ligands in the form of their transition-metal complexes as oxidation catalysts, or in the form of the defined catalytic systems.

In like manner, included in the definition of the preferred cross-bridged macropolycyclic ligands are those having the formula: 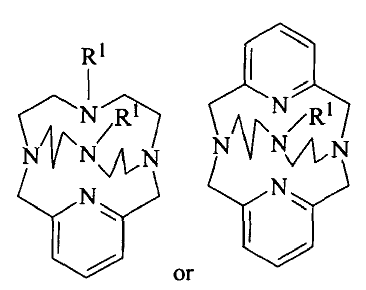 wherein in either of these formulae, "R¹" is independently selected from H, or, preferably, linear or branched, substituted or unsubstituted C₁-C₂₀ alkyl, alkenyl or alkynyl; and preferably all nitrogen atoms in the macropolycyclic rings are coordinated with the transition metal.

The present invention has numerous variations and alternate embodiments which do not depart from its spirit and scope. Thus, in the foregoing catalytic systems, the macropolycyclic ligand can be replaced by any of the following: 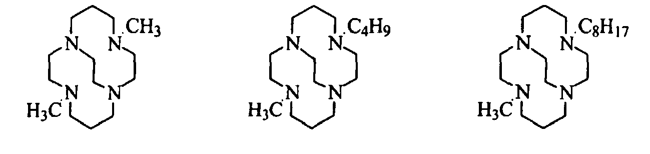 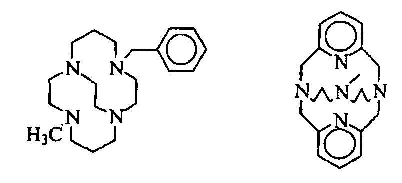 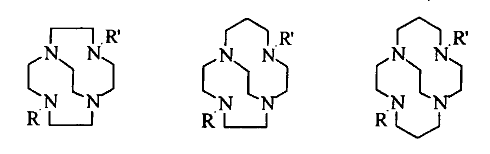 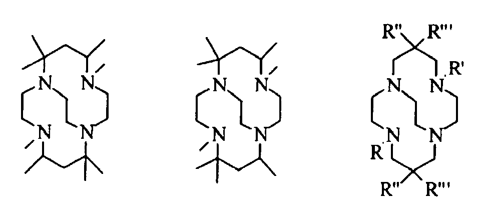 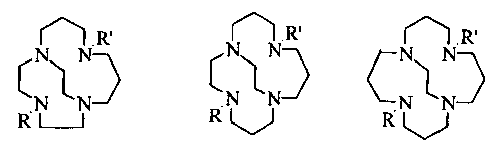 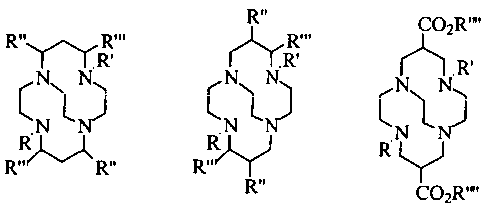 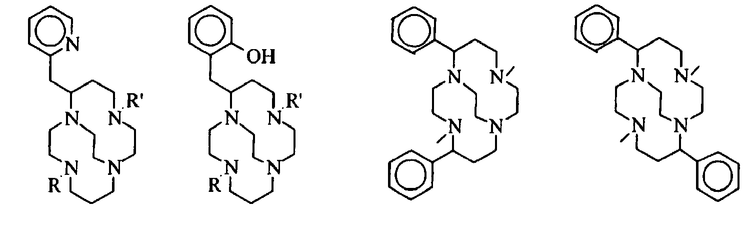 In the above, the R, R', R", R‴ moieties can, for example, be methyl, ethyl or propyl. (Note that in the above formalism, the short straight strokes attached to certain N atoms are an alternate representation for a methyl group).

While the above illustrative structures involve tetra-aza derivatives (four donor nitrogen atoms), ligands and the corresponding complexes in accordance with the present invention can also be made, for example from any of the following:

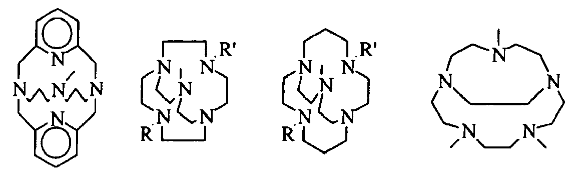

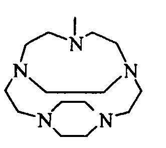

Moreover, using only a single organic macropolycycle, preferably a cross-bridged derivative of cyclam, a wide range of oxidation catalyst compounds of the invention may be prepared; numerous of these are believed to be novel chemical compounds. Preferred transition-metal catalysts of both cyclam-derived and non-cyclam-derived cross-bridged kinds are illustrated, but not limited, by the following: 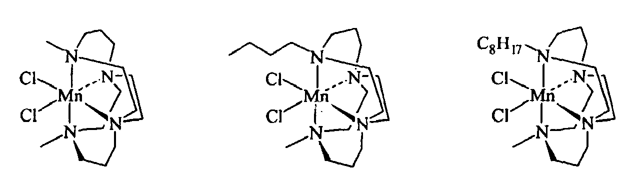 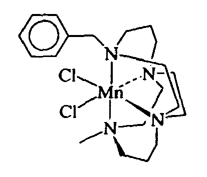 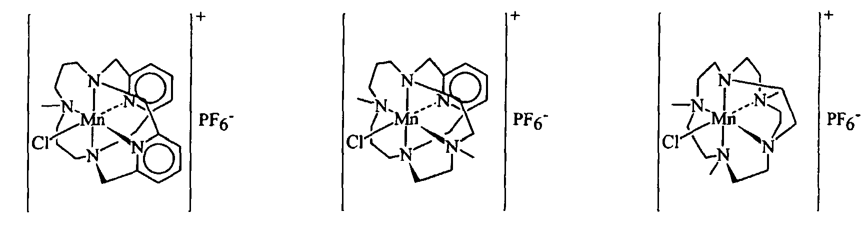 In other embodiments of the invention, transition-metal complexes, such as the Mn, Fe or Cr complexes, especially (II) and/or (III) oxidation state complexes, of the hereinabove-identified metals with any of the following ligands are also included: 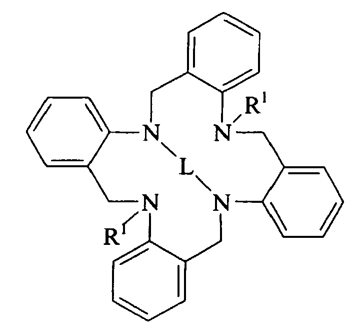 wherein R¹ is independently selected from H (preferably non-H) and linear or branched, substituted or unsubstituted C₁-C₂₀ alkyl, alkenyl or alkynyl and L is any of the linking moieties given herein, for example 1.10 or 1.11; 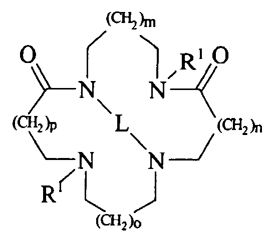 wherein R¹ is as defined supra; m,n,o and p can vary independently and are integers which can be zero or a positive integer and can vary independently while respecting the provision that the sum m+n+o+p is from 0 to 8 and L is any of the linking moieties defined herein; 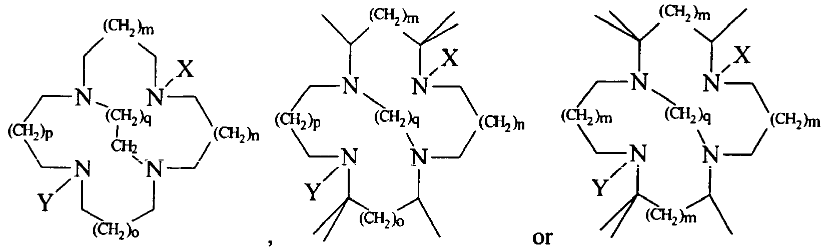 wherein X and Y can be any of the R¹ defined supra, m,n,o and p are as defined supra and q is an integer, preferably from 1 to 4; or, more generally, 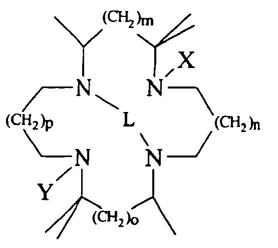 wherein L is any of the linking moieties herein, X and Y can be any of the R¹ defined supra, and m,n,o and p are as defined supra. Alternately, another useful ligand is: 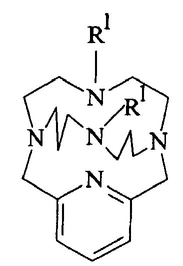 wherein R¹ is any of the R¹ moieties defined supra.

### Pendant Moieties

Macropolycyclic rigid ligands and the corresponding transition-metal complexes and oxidation catalytic systems herein may also incorporate one or more pendant moieties, in addition to, or as a replacement for, R¹ moieties. Such pendant moieties are nonlimitingly illustrated by any of the following:

―(CH₂)ₙ―CH₃ ―(CH₂)ₙ―C(O)NH₂

―(CH₂)ₙ―CN ―(CH₂)ₙ―C(O)OH

―(CH₂)ₙ―C(O)NR₂ ―(CH₂)ₙ―OH

―(CH₂)ₙ―C(O)OR

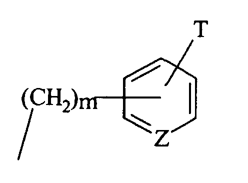

wherein R is, for example, a C1-C12 alkyl, more typically a C1-C4 alkyl, and Z and T are as defined in 1.11. Pendant moieties may be useful, for example, if it is desired to adjust the solubility of the catalyst in a particular solvent adjunct.

Alternately, complexes of any of the foregoing highly rigid, cross-bridged macropolycyclic ligands with any of the metals indicated are equally within the invention.

Preferred are catalysts wherein the transition metal is selected from manganese and iron, and most preferably manganese. Also preferred are catalysts wherein the molar ratio of transition metal to macropolycyclic ligand in the oxidation catalyst is 1:1, and more preferably wherein the catalyst comprises only one metal per oxidation catalyst complex. Further preferred transition-metal oxidation catalysts are monometallic, mononuclear complexes. The term "monometallic, mononuclear complex" is used herein in referring to an essential transition-metal oxidation catalyst compound to identify and distinguish a preferred class of compounds containing only one metal atom per mole of compound and only one metal atom per mole of cross-bridged macropolycyclic ligand.

Preferred transition-metal oxidation catalysts also include those wherein at least four of the donor atoms in the macropolycyclic rigid ligand, preferably at least four nitrogen donor atoms, two of which form an apical bond angle with the same transition metal of 180±50° and two of which form at least one equatorial bond angle of 90±20°. Such catalysts preferably have four or five nitrogen donor atoms in total and also have coordination geometry selected from distorted octahedral (including trigonal antiprismatic and general tetragonal distortion) and distorted trigonal prismatic, and preferably wherein further the cross-bridged macropolycyclic ligand is in the folded conformation (as described, for example, in Hancock and Martell, Chem. Rev., 1989, 89, at page 1894). A folded conformation of a cross-bridged macropolycyclic ligand in a transition-metal complex is further illustrated below:

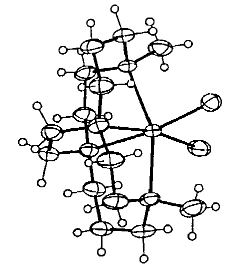

This catalyst is the complex of Example 1 hereinafter. The center atom is Mn; the two ligands to the right are chloride; and a Bcyclam ligand occupies the left side of the distorted octahedral structure. The complex contains an angle N-Mn-N of 158° incorporating the two mutually *trans*- donor atoms in "axial" positions; the corresponding angle N-Mn-N for the nitrogen donor atoms in plane with the two chloride ligands is 83.2°.

Stated alternately, the preferred synthetic, laundry, cleaning, papermaking, or effluent-treating catalytic systems herein contain transition-metal complexes of a macropolycyclic ligand in which there is a major energetic preference of the ligand for a folded, as distinct from an "open" and/or "planar" and or "flat" conformation. For comparison, a disfavored conformation is, for example, either of the trans-structures shown in Hancock and Martell, Chemical Reviews, (1989), 89, at page 1894 (see Figure 18), incorporated by reference.

In light of the foregoing coordination description, the present invention includes oxidation catalytic systems comprising a transition-metal oxidation catalyst, especially based on Mn(II) or Mn(III) or correspondingly, Fe(II) or Fe(III) or Cr(II) or Cr(III), wherein two of the donor atoms in the macropolycyclic rigid ligand, preferably two nitrogen donor atoms, occupy mutually *trans-* positions of the coordination geometry, and at least two of the donor atoms in the macropolycyclic rigid ligand, preferably at least two nitrogen donor atoms, occupy *cis-* equatorial positions of the coordination geometry, including particularly the cases in which there is substantial distortion as illustrated hereinabove.

The present catalytic systems can, furthermore, include transition metal oxidation catalysts in which the number of asymmetric sites can vary widely; thus both S- and R- absolute conformations can be included for any stereochemically active site. Other types of isomerism, such as geometric isomerism, are also included. The transition-metal oxidation catalyst can further include mixtures of geometric or stereoisomers.

### Example 1 -- Synthesis of [Mn(Bcyclam)Cl₂]

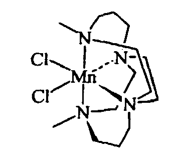

### (a) Method I.

"Bcyclam" (5,12-dimethyl-1,5,8,12-tetraaza-bicyclo[6.6.2]hexadecane) is prepared by a synthesis method described by G.R. Weisman, et al., J.Amer.Chem.Soc., (1990), 112, 8604. Bcyclam (1.00 g., 3.93 mmol) is dissolved in dry CH₃CN (35 mL, distilled from CaH₂). The solution is then evacuated at 15 mm until the CH₃CN begins to boil. The flask is then brought to atmospheric pressure with Ar. This degassing procedure is repeated 4 times. Mn(pyridine)₂Cl₂ (1.12 g., 3.93 mmol), synthesized according to the literature procedure of H. T. Witteveen et al., J. Inorg. Nucl. Chem., (1974), 36, 1535, is added under Ar. The cloudy reaction solution slowly begins to darken. After stirring overnight at room temperature, the reaction solution becomes dark brown with suspended fine particulates. The reaction solution is filtered with a 0.2µ filter. The filtrate is a light tan color. This filtrate is evaporated to dryness using a rotoevaporator. After drying overnight at 0.05 mm at room temperature, 1.35 g. off-white solid product is collected, 90% yield. Elemental Analysis: %Mn, 14.45; %C, 44.22; %H, 7.95; theoretical for [Mn(Bcyclam)Cl₂], MnC₁₄H₃₀N₄Cl₂, MW = 380.26. Found: %Mn, 14.98; %C, 44.48; %H, 7.86; Ion Spray Mass Spectroscopy shows one major peak at 354 mu corresponding to [Mn(Bcyclam)(formate)]⁺.

### (b) Method II.

Freshly distilled Bcyclam (25.00 g., 0.0984 mol), which is prepared by the same method as above, is dissolved in dry CH₃CN (900 mL, distilled from CaH₂). The solution is then evacuated at 15 mm until the CH₃CN begins to boil. The flask is then brought to atmospheric pressure with Ar. This degassing procedure is repeated 4 times. MnCl₂ (11.25 g., 0.0894 mol) is added under Ar. The cloudy reaction solution immediately darkens. After stirring 4 hrs. under reflux, the reaction solution becomes dark brown with suspended fine particulates. The reaction solution is filtered through a 0.2 µ filter under dry conditions. The filtrate is a light tan color. This filtrate is evaporated to dryness using a rotoevaporator. The resulting tan solid is dried overnight at 0.05 mm at room temperature. The solid is suspended in toluene (100 mL) and heated to reflux. The toluene is decanted off and the procedure is repeated with another 100 mL of toluene. The balance of the toluene is removed using a rotoevaporator. After drying overnight at.05 mm at room temperature, 31.75 g. of a light blue solid product is collected, 93.5% yield. Elemental Analysis: %Mn, 14.45; %C, 44.22; %H, 7.95; %N, 14.73; %Cl, 18.65; theoretical for [Mn(Bcyclam)Cl₂], MnC₁₄H₃₀N₄Cl₂, MW = 380.26. Found: %Mn, 14.69; %C, 44.69; %H, 7.99; %N, 14.78; %Cl, 18.90 (Karl Fischer Water, 0.68%). Ion Spray Mass Spectroscopy shows one major peak at 354 mu corresponding to [Mn(Bcyclam)(formate)]⁺.

### Example 2. Synthesis of [Mn(C₄-Bcyclam)Cl₂] where C₄-Bcyclam = 5-n-butyl-12-methyl-1,5,8,12-tetraaza-bicyclo[6.6.2]hexadecane

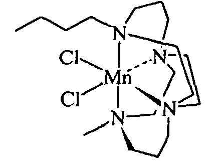

### (a) C₄-Bcyclam Synthesis

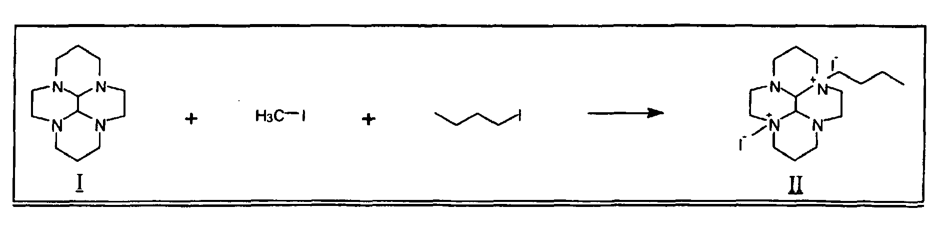

Tetracyclic adduct I is prepared by the literature method of H. Yamamoto and K. Maruoka, J. Amer. Chem. Soc., (1981) ,103, 4194. I (3.00 g., 13.5 mmol) is dissolved in dry CH₃CN (50 mL, distilled from CaH₂). 1-Iodobutane (24.84 g., 135 mmol) is added to the stirred solution under Ar. The solution is stirred at room temperature for 5 days. 4-Iodobutane (12.42 g., 67.5 mmol) is added and the solution is stirred an additional 5 days at RT. Under these conditions, I is fully mono-alkylated with 1-iodobutane as shown by ¹³C-NMR. Methyl iodide (26.5 g, 187 mmol) is added and the solution is stirred at room temperature for an additional 5 days. The reaction is filtered using Whatman #4 paper and vacuum filtration. A white solid, II, is collected (6.05 g., 82%).
¹³C NMR (CDCl₃) 16.3, 21.3, 21.6, 22.5, 25.8, 49.2, 49.4, 50.1, 51.4, 52.6, 53.9, 54.1, 62.3, 63.5, 67.9, 79.1, 79.2 ppm. Electro spray Mass Spec. (MH⁺/2, 147).

II (6.00 g., 11.0 mmol) is dissolved in 95% ethanol (500 mL). Sodium borohydride (11.0 g., 290 mmol) is added and the reaction turns milky white. The reaction is stirred under Ar for three days. Hydrochloric acid (100 mL, concentrated) is slowly dripped into the reaction mixture over 1 hour. The reaction mixture is evaporated to dryness using a rotoevaporator. The white residue is dissolved in sodium hydroxide (500 mL, 1.00N). This solution is extracted with toluene (2 x 150 mL). The toluene layers are combined and dried with sodium sulfate. After removal of the sodium sulfate using filtration, the toluene is evaporated to dryness using a rotoevaporator. The resulting oil is dried at room temperature under high vacuum (0.05 mm) overnight. A colorless oil results 2.95 g., 90%. This oil (2.10 g.) is distilled using a short path distillation apparatus (still head temperature 115 C at 0.05 mm). Yield: 2.00 g. ¹³C NMR (CDCl₃) 14.0, 20.6, 27.2, 27.7, 30.5, 32.5, 51.2, 51.4, 54.1, 54.7, 55.1, 55.8, 56.1, 56.5, 57.9, 58.0, 59.9 ppm. Mass Spec. (MH⁺, 297).

### (b) [Mn(C₄-Bcyclam)Cl₂] Synthesis

C₄-Bcyclam (2.00 g., 6.76 mmol) is slurried in dry CH₃CN (75 mL, distilled from CaH₂). The solution is then evacuated at 15 mm until the CH₃CN begins to boil. The flask is then brought to atmospheric pressure with Ar. This degassing procedure is repeated 4 times. MnCl₂ (0.81 g., 6.43 mmol) is added under Ar. The tan, cloudy reaction solution immediately darkens. After stirring 4 hrs. under reflux, the reaction solution becomes dark brown with suspended fine particulates. The reaction solution is filtered through a 0.2µ membrane filter under dry conditions. The filtrate is a light tan color. This filtrate is evaporated to dryness using a rotoevaporator. The resulting white solid is suspended in toluene (50 mL) and heated to reflux. The toluene is decanted off and the procedure is repeated with another 100 mL of toluene. The balance of the toluene is removed using a rotoevaporator. After drying overnight at 0.05 mm, RT, 2.4 g. a light blue solid results, 88% yield. Ion Spray Mass Spectroscopy shows one major peak at 396 mu corresponding to [Mn(C₄-Bcyclam)(formate)]⁺.

### Example 3. Synthesis of [Mn(Bz-Bcyclam)Cl₂] where Bz-Bcyclam = 5-benzyl-12-methyl-1,5,8,12-tetraaza- bicyclo[6.6.2]hexadecane

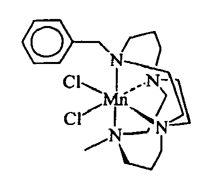

### (a) Bz-Bcyclam Synthesis

This ligand is synthesized similarly to the C₄-Bcyclam synthesis described above in Example 2(a) except that benzyl bromide is used in place of the 1-iodobutane.
¹³C NMR (CDCl₃) 27.6, 28.4, 43.0, 52.1, 52.2, 54.4, 55.6, 56.4, 56.5, 56.9, 57.3, 57.8, 60.2, 60.3, 126.7, 128.0, 129.1, 141.0 ppm. Mass Spec. (MH⁺, 331).

### (b) [Mn(Bz-Bcyclam)Cl₂] Synthesis

This complex is made similarly to the [Mn(C₄-Bcyclam)Cl₂] synthesis described above in Example 2(b) except that Bz-Bcyclam is used in place of the C₄-Bcyclam. Ion Spray Mass Spectroscopy shows one major peak at 430 mu corresponding to [Mn(Bz-Bcyclam)(formate)]⁺.

### Example 4. Synthesis of [Mn(C₈-Bcyclam)Cl₂] where C₈-Bcyclam= 5-n-octyl-12-methyl-1,5,8,12-tetraaza-bicyclo[6.6.2]hexadecane

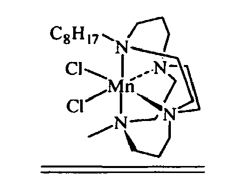

### (a) C₈-Bcyclam Synthesis:

This ligand is synthesized similarly to the C₄-Bcyclam synthesis described above in Example 2(a) except that 1-iodooctane is used in place of the 1-iodobutane.
Mass Spec. (MH⁺, 353).

### (b) [Mn(C₈-Bcyclam)Cl₂] Synthesis

This complex is made similarly to the [Mn(C₄-Bcyclam)Cl₂] synthesis described above in Example 2(b)except that C₈-Bcyclam is used in place of the C₄-Bcyclam. Ion Spray Mass Spectroscopy shows one major peak at 452 mu corresponding to
[Mn(B₈-Bcyclam)(formate)]⁺.

### Example 5. Synthesis of [Mn(H₂-Bcyclam)Cl₂] where H₂-Bcyclam = 1,5,8,12-tetraaza-bicyclo[6.6.2]hexadecane

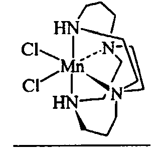

The H₂-Bcyclam is synthesized similarly to the C₄-Bcyclam synthesis described above except that benzyl bromide is used in place of the 1-iodobutane and the methyl iodide. The benzyl groups are removed by catalytic hydrogenation. Thus, the resulting 5,12-dibenzyl-1,5,8,12-tetraaza-bicyclo[6.6.2]hexadecane and 10% Pd on charcoal is dissolved in 85% acetic acid. This solution is stirred 3 days at room temperature under 1 atm. of hydrogen gas. The solution is filtered though a 0.2 micron filter under vacuum. After evaporation of solvent using a rotary evaporator, the product is obtained as a colorless oil. Yield: 90⁺%.

The Mn complex is made similarly to the [Mn(Bcyclam)Cl₂] synthesis described in Example 1(b) except that the that H₂-Bcyclam is used in place of the Bcyclam.
Elemental Analysis: %C, 40.92; %H, 7.44; %N, 15.91; theoretical for [Mn(H₂-Bcyclam)Cl₂], MnC₁₂H₂₆N₄Cl₂, MW = 352.2. Found: %C, 41.00; %H, 7.60; %N, 15.80. FAB+ Mass Spectroscopy shows one major peak at 317 mu corresponding to [Mn(H₂-Bcyclam)Cl]⁺ and another minor peak at 352 mu corresponding to [Mn(H₂-Bcyclam)Cl₂]⁺.

### Example 6. Synthesis of [Fe(H₂-Bcyclam)Cl₂] where H₂-Bcyclam = 1,5,8,12-tetraaza-bicyclo[6.6.2]hexadecane

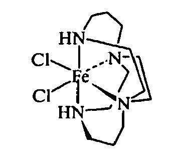

The Fe complex is made similarly to the [Mn(H₂-Bcyclam)Cl₂] synthesis described in Example 5 except that the that anhydrous FeCl₂ is used in place of the MnCl₂.
Elemental Analysis: %C, 40.82; %H, 7.42; %N, 15.87; theoretical for [Fe(H₂-Bcyclam)Cl₂], FeC₁₂H₂₆N₄Cl₂, MW = 353.1. Found: %C, 39.29; %H, 7.49; %N, 15.00. FAB+ Mass Spectroscopy shows one major peak at 318 mu corresponding to [Fe(H₂-Bcyclam)Cl]⁺ and another minor peak at 353 mu corresponding to [Fe(H₂-Bcyclam)Cl₂]⁺.

### Example 7.

Synthesis of: Chloro-20-methyl-1,9,20,24,25-pentaazatetracyclo[7.7.7.1^{3,7}.1^{11,15}.]pentacosa-3,5,7(24),11,13,15(25)-hexaene manganese(II) hexafluorophosphate ,7(b);
Trifluoromethanesulfono-20-methyl-1,9,20,24,25-pentaaza tetracyclo[7.7.7.1^{3,7}.1^{11,15}.]pentacosa-3,5,7(24),11,13,15(25)-hexaene manganese(II) trifluoromethanesulfonate, 7(c) and Thiocyanato-20-methyl-1,9,20,24,25-pentaazatetracyclo[7.7.7.1^{3,7}.1^{11,15}.]pentacosa-3,5,7(24),11,13,15(25)-hexaene iron(II) thiocyanate

### (a) Synthesis of the ligand 20-methyl-1,9,20,24,25-pentaazatetracyclo[7.7.7.1^{3,7}.1^{11,15}.]pentacosa-3,5,7(24),11,13,15(25)-hexaene

The ligand 7-methyl-3, 7, 11, 17-tetraazabicyclo[11.3.1¹⁷]heptadeca-1(17), 13, 15-triene is synthesized by the literature procedure of K. P. Balakrishnan et al., J. Chem. Soc., Dalton Trans., 1990, 2965.

7-methyl-3, 7, 11, 17-tetraazabicyclo[11.3.1¹⁷]heptadeca-1(17), 13, 15-triene (1.49g, 6mmol) and O,O'-bis(methanesulfonate)-2,6-pyridine dimethanol (1.77g, 6mmol) are separately dissolved in acetonitrile (60ml). They are then added via a syringe pump (at a rate of 1.2ml/hour) to a suspension of anhydrous sodium carbonate (53g, 0.5mol) in acetonitrile (1380ml). The temperature of the reaction is maintained at 65°C throughout the total reaction of 60 hours.

After cooling, the solvent is removed under reduced pressure and the residue is dissolved in sodium hydroxide solution (200ml, 4M). The product is then extracted with benzene (6 times 100ml) and the combined organic extracts are dried over anhydrous sodium sulfate. After filtration the solvent is removed under reduced pressure. The product is then dissolved in an acetonitrile/triethylamine mixture (95:5) and is passed through a column of neutral alumina (2.5 x 12cm). Removal of the solvent yields a white solid (0.93g, 44%).

This product may be further purified by recrystallization from an ethanol/diethylether mixture combined with cooling at 0°C overnight to yield a white crystalline solid. Anal. Calcd. for C₂₁H₂₉N₅: C, 71.75; H, 8.32; N, 19.93. Found: C, 71.41; H, 8.00; N, 20.00. A mass spectrum displays the expected molecular ion peak [for C₂₁H₃₀N₅]⁺ at m/z=352. The ¹H NMR(400MHz, in CD₃CN) spectrum exhibits peaks at δ=1.81 (m,4H); 2.19 (s, 3H); 2.56 (t, 4H); 3.52 (t,4H); 3.68 (AB, 4H), 4.13 (AB, 4H), 6.53 (d, 4H) and 7.07 (t, 2H). The ¹³C NMR(75.6MHz, in CD₃CN) spectrum shows eight peaks at δ=24.05, 58.52, 60.95, 62.94, 121.5, 137.44 and 159.33 ppm.

All metal complexation reactions are performed in an inert atmosphere glovebox using distilled and degassed solvents.

### (b) Complexation of the ligand L₁ with bis(pyridine) manganese (II) chloride

Bis(pyridine)manganese (II) chloride is synthesized according to the literature procedure of H. T. Witteveen et al., J. Inorg. Nucl. Chem., 1974, 36, 1535.

The ligand L₁ (1.24g, 3.5mmol), triethylamine(0.35g, 3.5mmol) and sodium hexafluorophosphate (0.588g, 3.5mmol) are dissolved in pyridine (12ml). To this is added bis(pyridine)manganese (II) chloride and the reaction is stirred overnight. The reaction is then filtered to remove a white solid. This solid is washed with acetonitrile until the washings are no longer colored and then the combined organic filtrates are evaporated under reduced pressure. The residue is dissolved in the minimum amount of acetonitrile and allowed to evaporate overnight to produce bright red crystals. Yield: 0.8g (39%). Anal. Calcd. for C₂₁H₃₁N₅Mn₁Cl₁P₁F₆: C, 43.00; H, 4.99 and N, 11.95. Found: C, 42.88; H, 4.80 and N 11.86. A mass spectrum displays the expected molecular ion peak [for C₂₁H₃₁N₅Mn₁Cl_{1]} at m/z=441. The electronic spectrum of a dilute solution in water exhibits two absorption bands at 260 and 414nm (ε=1.47 x 10³ and 773 M⁻¹cm⁻¹ respectively). The IR spectrum (KBr) of the complex shows a band at 1600cm⁻¹ (pyridine), and strong bands at 840 and 558 cm⁻¹ (PF₆-).

### (c) Complexation of the ligand with manganese (II) trifluoromethanesulfonate Manganese (II) trifluoromethanesulfonate is prepared by the literature procedure of Bryan and Dabrowiak, Inorg. Chem., 1975, 14, 297.

Manganese (II) trifluoromethanesulfonate (0.883g, 2.5mmol) is dissolved in acetonitrile (5ml). This is added to a solution of the ligand L₁(0.878g, 2.5mmol) and triethylamine (0.25g, 2.5mmol) in acetonitrile (5ml). This is then heated for two hours before filtering and then after cooling removal of the solvent under reduced pressure. The residue is dissolved in a minimum amount of acetonitrile and left to evaporate slowly to yield orange crystals. Yield 1.06g (60%). Anal. Calc. for Mn₁C₂₃H₂₉N₅S₂F₆O₆: C, 39.20; H, 4.15 and N, 9.95. Found: C, 38.83; H, 4.35 and N, 10.10. The mass spectrum displays the expected peak for [Mn₁C₂₂H₂₉N₅S₁F₃O₃]⁺ at m/z=555. The electronic spectrum of a dilute solution in water exhibits two absorption bands at 260 and 412nm (ε=9733 and 607 M⁻¹cm⁻¹ respectively). The IR spectrum (KBr) of the complex shows a band at 1600 cm⁻¹ (pyridine) and 1260, 1160 and 1030cm⁻¹(CF₃SO₃).

### (d) Complexation of the ligand with iron (II) trifluoromethanesulfonate Iron (II) trifluoromethanesulfonate is prepared in situ by the literature procedure Tait and Busch, Inorg. Synth., 1978, XVIII, 7.

The ligand (0.833g, 2.5 mmol) and triethylamine (0.505g, 5mmol) are dissolved in acetonitrile (5ml). To this is added a solution of hexakis(acetonitrile) iron (II) trifluoromethanesulfonate (1.5g, 2.5mmol) in acetonitrile (5ml) to yield a dark red solution. Sodium thiocyanate (0.406g, 5mmol) is then added and the reaction stirred for a further hour. The solvent is then removed under reduced pressure and the resulting solid is recrystallized from methanol to produce red microcrystals. Yield: 0.65g (50%). Anal. Calc. for Fe₁C₂₃H₂₉N₇S₂:C, 52.76; H, 5.59 and N, 18.74. Found: C 52.96; H, 5.53; N, 18.55. A mass spectrum displays the expected molecular ion peak [for Fe₁C₂₂H₂₉N₆S₁]⁺ at m/z=465. The ¹H NMR (300MHz, CD₃CN) δ=1.70(AB,2H), 2.0 (AB,2H), 2.24 (s,3H), 2.39 (m,2H), 2.70 (m,4H), 3.68 (m,4H), 3.95 (m,4H), 4.2 (AB,2H), 7.09 (d,2H), 7.19 (d,2H), 7.52 (t,1H), 7.61 (d,1H). The IR spectrum (KBr) of the spectrum shows peaks at 1608 cm⁻¹(pyridine) and strong peaks at 2099 and 2037cm⁻¹(SCN⁻).
Example 8[Mn(Bcyclam)Cl₂] is used in a catalytic system including the transition metal complex, water as solvent, and t-butyl peroxide as primary oxidant, to catalyze the oxidation of a lignin model compound. See U.S. 5,077,394, Example 9, incorporated by reference, for details. The Mn complex replaces the iron porphyrin complex of '394.

### Example 8

[Mn(Bcyclam)Cl₂] is used in a catalytic system including the transition metal complex, dimethylformamide as solvent, and peracetate as primary oxidant, to catalyze the oxidation of lignin. See U.S. 5,077,394, Example 10, incorporated by reference, for details. The Mn complex replaces the iron porphyrin complex of this patent. In more detail, 250 micrograms of the Kraft softwood lignin Indulin AT (Westvaco Corporation, Charleston Heights, S.C) is dissolved in 2 ml DMF. Peracetic acid is used as the primary oxidant at a final concentration of 1.84 micromolar. The Mn complex is used at a final concentration of 500 micromolar. The reaction mixture is stirred at room temperature for 24 hours and the resulting products are analyzed by gel permeation chromatography; any convenient column and solvent arrangement may suffice, though a TSK 4000 column with 1:1 chloroform:dioxane (Phenomenex, Rancho Palos Verdes, Calif.) may be useful. Absorbance is monitored at a suitable wavelength, for example 280 nm, and a distinct shift of the peaked area to the right indicates that a degradation of lignin has occurred.

### Example 9

[Mn(Bcyclam)Cl₂] is used in a catalytic system including the transition metal complex, water, and a range of different primary oxidants, to catalyze the oxidation of veratryl alcohol to veratrylaldehyde. See U.S. 5,077,394, Example 11, incorporated by reference, for details. The Mn complex replaces the manganese porphyrin complex of this patent. The oxidants include hydrogen peroxide, sodium hypochlorite, t-butylhydroperoxide, cumylhydroperoxide, potassium iodate and iodosylbenzene and the experiments are carried out over a range of pH of from 1 to 13 and with a variety of oxidant concentrations. The product is veratrylaldehyde. Yields tend to vary with pH and time, with evidence of product formation being obtained under a variety of conditions including slightly acid (e.g., pH 6.5) to mildly alkaline (e.g., pH 8.5-9). The catalyst effects an improvement over non-catalyzed reaction.

### Example 10

[Mn(Bcyclam)Cl₂] is used in a catalytic system including the transition metal complex, solvent, and primary oxidant, to epoxidize cylohexene. See U.S. 5,077,394, Example 13, incorporated by reference, for one possible procedure. The Mn complex replaces the complexes used in this patent.

### Example 11

[Mn(Bcyclam)Cl₂] is used in a catalytic system including the transition metal complex, water as solvent, and hydrogen peroxide/peracetic acid buffered in sodium carbonate/bicarbonate at pH of about 9, to oxidize a blue dye, suitably Chicago Sky Blue 6B (Aldrich), to a colorless product. The reaction can be monitored by ultraviolet spectroscopy.

### EXAMPLE 13 - Dichloro Manganese (II) 5,8 Dimethyl-1,5,8,12-tetraazabicyclo[10.3.2]heptadecane Synthesis

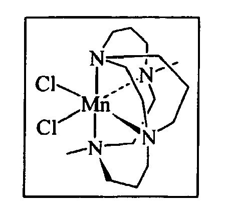

### Synthesis of 1,5,9,13-Tetraazatetracyclo[11.2.2.2^{5,9}]heptadecane

1,4,8,12-tetraazacyclopentadecane (4.00 g, 18.7 mmol) is suspended in acetonitrile (30 mL) under nitrogen and to this is added glyoxal (3.00 g, 40% aqueous, 20.7 mmol). The resulting mixture is heated at 65°C for 2 hours. The acetonitrile is removed under reduced pressure. Distilled water (5 mL) is added and the product is extracted with chloroform (5x40 mL). After drying over anhydrous sodium sulfate and filtration, the solvent is removed under reduced pressure. The product is then chromatographed on neutral alumina (15 x 2.5 cm) using chloroform/methanol (97.5:2.5 increasing to 95:5). The solvent is removed under reduced pressure and the resulting oil is dried under vacuum, overnight. Yield: 3.80 g, I (87%).

### Synthesis of 1,13-Dimethyl-1,13-diazonia-5,9-diazatetracyclo[11.2.2.2^{5,9}]heptadecane diiodide

1,5,9,13-tetraazatetracyclo[11.2.2.2^{5,9}]heptadecane (5.50 g, 23.3 mmol) is dissolved in acetonitrile (180 mL) under nitrogen. Iodomethane (21.75 mL, 349.5 mmol) is added and the reaction is stirred at RT for 10 days. The solution is rotovapped down to a dark brown oil. The oil is taken up in absolute ethanol (100 mL) and this solution is refluxed 1 hour. During that time, a tan solid formed which is separated from the mother liquor by vacuum filtration using Whatman #1 filter paper. The solid is dried under vacuum, overnight. Yield: 1.79 g, II, (15%). Fab Mass Spec. TG/G, MeOH) M⁺ 266 mu, 60%, MI⁺ 393 mu, 25%.

### Synthesis of 5,8 Dimethyl-1,5,8,12-tetraazabicyclo[10.3.2]heptadecane

To a stirred solution of II, (1.78 g, 3.40 mmol) in ethanol (100 mL,95%) is added sodium borohydride (3.78 g. 0.100 mmol). The reaction is stirred under nitrogen at RT for 4 days. 10% Hydrochloric acid is slowly added until the pH is 1-2 to decompose the unreacted NaBH₄. Ethanol (70 mL) is then added. The solvent is removed by roto-evaporation under reduced pressure. The product is then dissolved in aqueous KOH (125 mL, 20%), resulting in a pH 14 solution. The product is then extracted with benzene (5 x 60 mL) and the combined organic layers are dried over anhydrous sodium sulfate. After filtering, the solvent is removed under reduced pressure. The residue is slurried with crushed KOH and then distilled at 97°C at ∼1 mm pressure. Yield: 0.42 g, III, 47%. Mass Spec. (D-CI/NH₃/CH₂Cl₂) MH⁺, 269 mu, 100%.

### Synthesis of Dichloro Manganese (II) 5,8 Dimethyl-1,5,8,12-tetraazabicyclo[10.3.2]heptadecane

The ligand III, (0.200g, 0.750 mmol) is dissolved in acetonitrile (4.0 mL) and is added to maganese(II) dipyridine dichloride (0.213 g, 0.75 mmol). The reaction is stirred for four hours at RT to yield a pale gold solution. The solvent is removed under reduced pressure. Sodium thiocyanate (0.162 g, 2.00 mmol) dissolved in methanol (4 mL) is then added. The reaction is heated 15 minutes. The reaction solution is then filtered through celite and allowed to evaporate. The resulting crystals are washed with ethanol and dried under vacuum. Yield: 0.125 g, 38%. This solid contains NaCl so it is recrystallized in acetonitrile to yield 0.11 g off a white solid. Elemental analysis theoretical: %C, 46.45, %H, 7.34, %N, 19.13. Found: %C, 45.70, %H, 7.10, %N, 19.00.

## Claims

1. A catalytic system effective for oxidation of materials comprising:
(a) from 1 ppb to 500ppm of a transition-metal oxidation catalyst, said catalyst comprising a complex of a transition metal and a cross-bridged macropolycyclic ligand, wherein:
(1) said transition metal is selected from the group consisting of Mn(II), Mn(III), Mn(IV), Mn(V), Fe(II), Fe(III), Fe(IV), Cr(II), Cr(III), Cr(IV), Cr(V), Cr(VI); and
(2) said macropolycyclic rigid ligand is coordinated by at least four, preferably five, donor atoms to the same transition metal and comprises:
(i) an organic macrocycle ring containing four or more donor atoms, preferably at least 3, more preferably at least 4, of these donor atoms are N, separated from each other by covalent linkages of at least one, preferably 2 or 3, non-donor atoms, two to five, preferably three to four, more preferably four, of these donor atoms being coordinated to the same transition metal in the complex;
(ii) a linking moiety that is a cross-bridged chain, which covalently connects at least 2 non-adjacent donor atoms of the organic macrocycle ring, said covalently connected non-adjacent, donor atoms being bridgehead donor atoms which are coordinated to the same transition metal in the complex, and wherein said linking moiety comprises from 2 to 10 atoms, wherein the preferred cross-bridged chain is selected from 2, 3 or 4 non-donor atoms, and 4-6 non-donor atoms with a further donor atom; and
(3) one or more non- macropolycyclic ligands, preferably selected from the group consisting of H₂O, ROH, NR₃, RCN, OH⁻, OOH⁻, RS⁻, RO⁻, RCOO⁻, OCN⁻, SCN⁻, N₃⁻, CN⁻, F⁻, Cl⁻, Br⁻, I⁻, O₂⁻, NO₃⁻, NO₂⁻, SO₄²⁻, SO₃²⁻, PO₄³⁻, organic phosphates, organic phosphonates, organic sulfates, organic sulfonates, and aromatic N donors such as pyridines, pyrazines, pyrazoles, imidazoles, benzimidazoles, pyrimidines, triazoles and thiazoles with R being H, optionally substituted alkyl, optionally substituted aryl; and
(b) the balance to 100% of one or more detergent adjunct materials.

2. A catalytic system according to claim 1, wherein the macropolycyclic ligand is cross-bridged and wherein the donor atoms in the organic macrocycle ring of the cross-bridged macropolycyclic ligand are selected from the group consisting of N, O, S, and P, preferably N and O, and most preferably all N.

3. A catalytic system according to any preceding laim, wherein all the donor atoms in the macropolycyclic rigid ligand are selected from the group consisting of N.

4. A catalytic system according to any preceding claim, wherein the macropolycyclic rigid ligand comprises 5 donor atoms, all of which are coordinated with the same transition metal.

5. A catalytic system according to any preceding claim, wherein the macropolycyclic rigid ligand comprises 4, preferably 5, nitrogen donor atoms all coordinated to the same transition metal.

6. A catalytic system according to any preceding claim, wherein the oxidation catalyst is a monometallic, mononuclear complex.

7. A catalytic system according to any preceding claim, wherein at least four of the donor atoms in the macropolycyclic rigid ligand, preferably at least four nitrogen donor atoms, form an apical bond angle with the same transition metal of 180±50° and at least one equatorial bond angle of 90±20°.

8. A catalytic system according to any preceding claim, wherein the transition-metal oxidation catalyst has a coordination geometry selected from distorted octahedral and distorted trigonal prismatic, and preferably wherein further the cross-bridged macropolycyclic ligand is in the folded conformation.

9. A catalytic system according to any preceding claim, wherein two of the donor atoms in the macropolycyclic rigid ligand, preferably two nitrogen donor atoms, occupy mutually trans positions of the coordination geometry, and at least two of the donor atoms in the macropolycyclic rigid ligand, preferably at least two nitrogen donor atoms, occupy cis-equatorial positions of the coordination geometry.

10. A catalytic system according to any preceding claim, wherein the catalytic system comprises one or two non-macropolycyclic ligands.

11. A catalytic system according to any preceding claim, wherein the cross-bridged macropolycyclic ligand comprises an organic macrocycle ring containing at least 10 atoms, preferably from 12 to 20 atoms.

12. A catalytic system according to any preceding claim, wherein the transition metal is selected from manganese and iron.

13. A catalytic system according to any preceding claim, wherein the catalytic system comprises an oxygen bleaching agent.

## Patentansprüche

1. Katalytisches System, das zur Oxidation von Materialien wirksam ist, umfassend;
(a) von 1 ppb bis 500 ppm an einem Übergangsmetall-Oxidationskatalysator, wobei der Katalysator einen Komplex eines Übergangsmetalls und eines querverbrückten makropolycyclischen Liganden umfasst, worin:
(1) das Übergangsmetall ausgewählt ist aus der Gruppe, bestehend aus Mn(II), Mn(III), Mn(IV), Mn(V), Fe(II), Fe(III), Fe(IV), Cr(II), Cr(III), Cr(IV), Cr(V), Cr(VI); und
(2) der makropolycyclische starre Ligand durch mindestens vier, vorzugsweise fünf Donoratome an dasselbe Übergangsmetall koordiniert ist und Folgendes umfasst:
(i) einen organischen makrocyclischen Ring, der vier oder mehr Donoratome (vorzugsweise sind mindestens 3, mehr bevorzugt mindestens 4 dieser Donoratome N) enthält, die voneinander durch kovalente Bindungen an mindestens einem, vorzugsweise 2 oder 3 Nichtdonoratomen getrennt sind, wobei zwei bis fünf (vorzugsweise drei bis vier, mehr bevorzugt vier) dieser Donoratome an dasselbe Übergangsmetall in dem Komplex koordiniert sind;
(ii) eine Bindungseinheit, die eine querverbrückte Kette ist, die mindestens 2 nicht benachbarte Donoratome des organischen makrocyclischen Rings kovalent verbindet, wobei die kovalent verbundenen nicht benachbarten Donoratome Brückenkopf-Donoratome sind, die an dasselbe Übergangsmetall in dem Komplex koordiniert sind und wobei die Bindungseinheit von 2 bis 10 Atome umfasst, wobei die bevorzugte querverbrückte Kette aus 2, 3 oder 4 Nichtdonoratomen und 4-6 Nichtdonoratomen mit einem weiteren Donoratom ausgewählt ist; und
(iii) einen oder mehrere nicht makropolycyclische Liganden, vorzugsweise ausgewählt aus der Gruppe, bestehend aus H₂O, ROH, NR₃, RCN, OH⁻,OOH⁻, RS⁻, RO⁻, RCOO⁻, OCN⁻, SCN⁻, N₃⁻, CN⁻, F⁻, Cl⁻, Br⁻, I⁻, O₂⁻, NO₃⁻, NO₂⁻, SO₄²⁻, SO₃²⁻, PO₄³⁻, organischen Phosphaten, organischen Phosphonaten, organischen Sulfaten, organischen Sulfonaten und aromatischen N-Donoren, wie Pyridinen, Pyrazinen, Pyrazolen, Imidazolen, Benzimidazolen, Pyrimidinen, Triazolen und Thiazolen, worin R H, wahlweise substituiertes Alkyl, wahlweise substituiertes Aryl ist; und
(b) zu übrigen Teilen bis 100 % ein oder mehrere Reinigungsmittel-Zusatzmaterialien.

2. Katalytisches System nach Anspruch 1, wobei der makropolycyclische Ligand querverbrückt ist und wobei die Donoratome in dem organischen makrocyclischen Ring des querverbrückten makropolycyclischen Liganden ausgewählt sind aus der Gruppe, bestehend aus N, O, S und P, vorzugsweise N und O und am meisten bevorzugt alle N sind.

3. Katalytisches System nach einem der vorstehenden Ansprüche, wobei alle die Donoratome in dem makropolycyclischen starren Liganden ausgewählt sind aus der Gruppe, bestehend aus N.

4. Katalytisches System nach einem der vorstehenden Ansprüche, wobei der makropolycyclische starre Ligand 5 Donoratome umfasst, die alle an dasselbe Übergangsmetall koordiniert sind.

5. Katalytisches System nach einem der vorstehenden Ansprüche, wobei der makropolycyclische starre Ligand 4, vorzugsweise 5 Stickstoffdonoratome umfasst, die alle an dasselbe Übergangsmetall koordiniert sind.

6. Katalytisches System nach einem der vorstehenden Ansprüche, wobei der Oxidationskatalysator ein monometallischer, mononuklearer Komplex ist.

7. Katalytisches System nach einem der vorstehenden Ansprüche, wobei mindestens vier der Donoratome in dem makropolycyclischen starren Liganden, vorzugsweise mindestens vier Stickstoffdonoratome, einen apikalen Bindungswinkel mit demselben Übergangsmetall von 180±50° und mindestens einen äquatorialen Bindungwinkel von 90±20° bilden.

8. Katalytisches System nach einem der vorstehenden Ansprüche, wobei der Übergangsmetall-Oxidationskatalysator eine Koordinationsgeometrie aufweist, die ausgewählt ist aus verzerrter oktaedrischer und verzerrter dreieckiger prismatischer, und wobei vorzugsweise der querverbrückte makropolycyclische Ligand in der gefalteten Konformation vorliegt.

9. Katalytisches System nach einem der vorstehenden Ansprüche, wobei zwei der Donoratome in dem makropolycyclischen starren Liganden, vorzugsweise zwei Stickstoffdonoratome, gegenseitig trans-Positionen der Koordinationsgeometrie besetzen und mindestens zwei der Donoratome in dem makropolycyclischen starren Liganden, vorzugsweise mindestens zwei Stickstoffdonoratome, cis-äquatoriale Positionen der Koordinationsgeometrie besetzen.

10. Katalytisches System nach einem der vorstehenden Ansprüche, wobei das katalytische System einen oder zwei nicht makropolycyclische Liganden umfasst.

11. Katalytisches System nach einem der vorstehenden Ansprüche, wobei der querverbrückte makropolycyclische Ligand einen organischen makrocyclischen Ring umfasst, der mindestens 10 Atome, vorzugsweise von 12 bis 20 Atome enthält.

12. Katalytisches System nach einem der vorstehenden Ansprüche, wobei das Übergangsmetall aus Mangan und Eisen ausgewählt ist.

13. Katalytisches System nach einem der vorstehenden Ansprüche, wobei das katalytische System ein Sauerstoffbleichmittel umfasst.

## Revendications

1. Système catalytique efficace pour l'oxydation de matériaux comprenant ;
(a) de 1 ppm à 500 ppm d'un catalyseur d'oxydation de métal de transition, ledit catalyseur comprenant un complexe d'un métal de transition et un ligand macropolycyclique à ponts transversaux, dans lequel :
(1) ledit métal de transition est choisi dans le groupe constitué de Mn(II), Mn(III), Mn(IV), Mn(V), Fe(II), Fe(III), Fe(IV), Cr(II), Cr(III), Cr(IV), Cr(V), Cr(VI) ; et
(2) ledit ligand rigide macropolycyclique est coordonné par au moins quatre, de préférence cinq, atomes donneurs au même métal de transition et comprend :
(i) un noyau macrocyclique organique contenant quatre atomes donneurs ou plus, de préférence au moins 3, plus préférablement au moins 4, de ces atomes donneurs sont N, séparés les uns des autres par des liaisons covalentes d'au moins un, de préférence 2 ou 3, atomes non donneurs, deux à cinq, de préférence trois à quatre, plus préférablement quatre de ces atomes donneurs étant coordonnés au même métal de transition dans le complexe ;
(ii) un fragment de liaison qui est une chaîne à ponts transversaux, qui lie de manière covalente au moins 2 atomes donneurs non-adjacents du noyau macrocyclique organique, lesdits atomes donneurs non-adjacents liés de manière covalente étant des atomes donneurs en tête de pont qui sont coordonnés au même métal de transition dans le complexe, et où ledit fragment de liaison comprend de 2 à 10 atomes, dans lequel la chaîne à ponts transversaux préférée est choisie parmi 2, 3 ou 4 atomes non donneurs, et de 4 à 6 atomes non donneurs avec un atome donneur supplémentaire ; et
(3) un ou plusieurs ligands non-macropolycycliques, de préférence choisis dans le groupe constitué de H₂O, ROH, NR₃, RCN, OH-,OOH⁻, RS⁻, RO⁻, RCOO⁻, OCN⁻, SCN⁻, N₃⁻, CN⁻, F⁻, Cl⁻, Br⁻, I⁻, O₂⁻, NO₃⁻, NO₂⁻, SO₄²⁻, SO₃²⁻, PO₄³⁻, phosphates organiques, phosphonates organiques, sulfates organiques, sulfonates organiques, et des donneurs N aromatiques, comme par exemple des pyridines, des pyrazines, des pyrazoles, des imidazoles, des benzimidazoles, des pyrimidines, des triazoles et des thiazoles avec R étant H, éventuellement de l'alkyle substitué, éventuellement de l'aryle substitué ; et
(b) le complément à 100 % d'un ou plusieurs matériaux additifs détergents.

2. Système catalytique selon la revendication 1, dans lequel le ligand macropolycyclique est à ponts transversaux et dans lequel les atomes donneurs du noyau macrocyclique organique du ligand macropolycyclique à ponts transversaux sont choisis dans le groupe constitué de N, O, S, et P, de préférence N et O, et le plus préférablement tous N.

3. Système catalytique selon l'une quelconque des revendications précédentes, dans lequel tous les atomes donneurs du ligand rigide macropolycyclique sont choisis dans le groupe constitué de N.

4. Système catalytique selon l'une quelconque des revendications précédentes, dans lequel le ligand rigide macropolycyclique comprend 5 atomes donneurs, dont tous sont coordonnés avec le même métal de transition.

5. Système catalytique selon l'une quelconque des revendications précédentes dans lequel le ligand rigide macropolycyclique comprend 4, de préférence 5, atomes donneurs d'azote, tous coordonnés au même métal de transition.

6. Système catalytique selon l'une quelconque des revendications précédentes, dans lequel le catalyseur d'oxydation est un complexe monométallique, mononucléaire.

7. Système catalytique selon l'une quelconque des revendications précédentes, dans lequel au moins quatre des atomes donneurs du ligand rigide macropolycyclique, de préférence au moins quatre atomes donneurs d'azote, forment un angle de liaison apical avec le même métal de transition de 180±50° et au moins un angle de liaison équatorial de 90±20°.

8. Système catalytique selon l'une quelconque des revendications précédentes, dans lequel le catalyseur d'oxydation du métal de transition a une géométrie de coordination choisie parmi un octaèdre déformé et un prismatique trigonal déformé, et de préférence dans lequel, en outre, le ligand macropolycyclique à ponts transversaux est dans sa conformation pliée.

9. Système catalytique selon l'une quelconque des revendications précédentes, dans lequel deux des atomes donneurs du ligand rigide macropolycyclique, de préférence deux atomes donneurs d'azote, occupent mutuellement des positions trans de la géométrie de coordination, et au moins deux des atomes donneurs du ligand rigide macropolycyclique, de préférence au moins deux atomes donneurs d'azote, occupent des positions cis-équatoriales de la géométrie de coordination.

10. Système catalytique selon l'une quelconque des revendications précédentes, dans lequel le système catalytique comprend un ou deux ligands non-macropolycycliques.

11. Système catalytique selon l'une quelconque des revendications précédentes, dans lequel le ligand macropolycyclique à ponts transversaux comprend un noyau macrocyclique organique contenant au moins 10 atomes, de préférence de 12 à 20 atomes.

12. Système catalytique selon l'une quelconque des revendications précédentes, dans lequel le métal de transition est choisi parmi le manganèse et le fer.

13. Système catalytique selon l'une quelconque des revendications précédentes, où le système catalytique comprend un agent de blanchiment à l'oxygène.
